# EUROPÄISCHE PATENTSCHRIFT

(11) **EP 3 954 923 B1**
(45) Veröffentlichungstag und Bekanntmachung des Hinweises auf die Patenterteilung: **02.10.2024**
(21) Anmeldenummer: 21190168.1
(22) Anmeldetag: 06.08.2021
(51) Int. Cl.: F16G 15/08

(54) **LASTHALTER MIT NIVELLIERMODUL UND MESSMODUL**
LOAD HOLDER WITH LEVELLING MODULE AND MEASURING MODULE
PORTE-CHARGE POURVU DE MODULE DE NIVELLEMENT ET DE MODULE DE MESURE

(30) Priorität: 10.08.2020 DE 102020121034
(43) Veröffentlichungstag der Anmeldung: 16.02.2022
(73) Patentinhaber: Reutlinger GmbH, 60437 Frankfurt am Main (DE)
(72) Erfinder: Volberg, Jürgen, 53844 Troisdorf (DE); Peter, Wolfgang, 72655 Altdorf (Nürtingen) (DE)
(74) Vertreter: Keil & Schaafhausen Patentanwälte PartGmbB

(56) Entgegenhaltungen:
- KR-B1- 100 988 762
- US-A- 3 683 355
- US-A- 6 073 496

## Beschreibung

Die vorliegende Erfindung betrifft einen Lasthalter für ein Abhängesystem zum Abhängen von Lasten, umfassend Befestigungsmittel zum lösbaren Befestigen eines Aufhängemoduls und/oder ein Aufhängemodul an einem ersten Ende des Lasthalters sowie eine Lastaufnahmevorrichtung an einem zweiten Ende des Lasthalters, welches dem ersten Ende entlang einer Längsrichtung des Lasthalters abgewandt ist. Die Erfindung betrifft ferner ein Lasthaltersystem mit mindestens einem Lasthalter.

Bei Veranstaltungen, wie Messen, Konzerten, Ausstellungen, Präsentationen und Tagungen, werden Abhängesystem genutzt, um Lasten für mobile, ortsveränderliche oder temporäre Anwendungen an Hängepunkten zu befestigen. Abgehängt werden beispielsweise Beleuchtungen, große Bildschirme, Messe-Tafeln, Messe-Banner, Informationsanzeigen und ähnliches.

Die Hängepunkte sind typischerweise rasterförmig an der Decke einer Halle oder an Tragbalken angeordnet.

Die einzelnen Hängepunkte haben eine begrenzte Haltelast. Für das Abhängen einer großen und/oder schweren Last werden mehrere Hängepunkt gleichzeitig genutzt. Ein Abhängesystem verteilt die Gewichtskraft der Last auf die verschiedenen Hängepunkte. Dabei soll eine Gewichtskraft der Last möglichst gleichmäßig in die verschiedenen Hängepunkte eingeleitet werden.

Zum Beispiel werden zur Aufhängung eines großen und schweren Bildschirms bei einer Messeveranstaltung mehrere Hängepunkt an der Decke einer Messehalle genutzt. Zunächst wird eine längliche Zwischentraverse an die mehreren Hängepunkte gehängt. An die Zwischentraverse wird wiederum der Bildschirm gehängt. Die Zwischentraverse hilft dabei, eine Gewichtskraft des Bildschirms auf die mehreren Hängepunkte zu verteilen. Die Zwischentraverse hilft außerdem dabei, das Display korrekt waagrecht auszurichten. Eine große Zwischentraverse kann selbst ein Gewicht von etwa einer Tonne (1000 kg) aufweisen.

Für das Verbinden der Zwischentraverse mit den einzelnen Hängepunkten und/oder für das Verbinden der Last, beispielsweise des Bildschirms, mit der Zwischentraverse können Lasthalter verwendet werden. Mit einem der Lasthalter kann beispielsweise ein Drahtseil zum Abhängen mit einem Aufhängungshaken eines anderen Drahtseils verbunden werden. Die Lasthalter dienen also als Zwischen- bzw. Verbindungselement in dem gesamten Abhängesystem.

Die maximale Zuglast eines einzelnen Hängepunkts liegt häufig in einem Bereich der Gewichtskraft einer Masse von 50 kg bis 150 kg. Die Haltelast eines Hängepunkts darf nicht überschritten werden. Ansonsten besteht die Gefahr, dass es zu einem Absturz der Last kommt. Der Absturz der Last kann zu Sachschäden und zu Verletzungen bis hin zu Todesfällen führen. Bei Messen muss deshalb bisweilen vor der Eröffnung nachgewiesen werden, dass die Haltelasten der einzelnen Hängepunkte jeweils nicht überschritten werden.

Dazu werden bisher temporär Zuglastmessgeräte in das Abhängesystem integriert. Mit den Zuglastmessgeräten wird die Belastung für die einzelnen Hängepunkte geprüft. Die zusätzlichen Zuglasstmessgeräte sind jedoch teuer. Zur korrekten waagrechten Ausrichtung der Last und zum richtigen Verteilen der Gewichtskraft auf die einzelnen Haltepunkte müssen außerdem die Längen der verschiedenen Drahtseile und/oder Ketten aufwendig angepasst werden.

Wenn sich nach dem Aufbau des Abhängesystems und dem Hochziehen der Last herausstellt, dass die Lastverteilung nicht wie gewünscht erfolgt, muss die Last wieder abgelassen werden und ein Umbau des Lastsystems erfolgen.

Das zusätzliche Installieren der Zuglastmessgeräte für die Prüfung und das Anpassen des Abhängesystems zur Optimierung der Lastverteilung kosten viel Aufwand und Zeit. Das verursacht hohe, zusätzliche Kosten.

Zudem können sich nach der Prüfung und nach Entfernen des jeweiligen Zuglastmessgeräts die Zuglasten für die einzelnen Haltepunkte wieder verändern. Zum Beispiel kann sich die Zwischentraverse verbiegen und dadurch die Lastverteilung in dem Abhängesystem verändern. Dann verändern sich auch die Zuglasten, die in die einzelnen Lasthalter und Hängepunkte eingeleitet werden. Auch kleine Längenänderung einzelner Drahtseile oder Ketten des Abhängesystems, beispielsweise verursacht durch Temperaturveränderungen oder Kriechen des Materials, können leicht zu erheblichen Änderungen in der Lastverteilung führen. Ferner können - vor allem im Freien - externe Faktoren wie Wind oder Eisbildung am Abhängesystem und/oder an der Last zu veränderten Zuglasten an den einzelnen Hängepunkten und Lasthaltern führen. Selbst wenn anfangs korrekt nachgewiesen wird, dass die maximalen Zuglasten der Komponenten des Abhängesystems und/oder der Hängepunkte nicht überschritten werden, kann dies später immer noch unbemerkt eintreten.

Außerdem gewährleistet das bisherige Vorgehen keine gleichzeitige Prüfung aller relevanter Zuglasten bereits beim Justieren und Einstellen des Abhängesystems. Insbesondere beim Hochziehen oder Herablassen der Last kommt es häufig unbeabsichtigt zu einer asymmetrischen Ausrichtung der Last und damit auch zu einer asymmetrischen Lastverteilung. Dadurch werden schnell die maximalen Zuglasten einzelner Drahtseile, Ketten, Lasthalter und/oder Hängepunkte überschritten.

Aus den genannten Gründen kommt es trotzt umfangreicher Sicherheitsmaßnahmen immer wieder zum Überschreiten von Zuglastgrenzen und damit zum ungewollten Absturz von Lasten, wie beispielsweise von großen Bildschirmen, die mit einem Abhängesystem an Hängepunkten aufgehangen werden oder aufgehangen sind.

US 6,683,355 A offenbart eine Rollenmontage, die über Bolzen mit einer Helikopter-Rumpfstruktur verbunden ist. Eine Endstruktur mit einem Haken ist über ein Seil mit der Rollenmontage verbunden. Wenn eine Zuglast über den Haken in das Seil eingebracht wird, verformen sich Tellerfedern in der Endstruktur, sodass sich der Haken gegenüber dem Seil verschiebt. In der Endstruktur verschiebt sich entsprechend eine Hakenaufnahme gegenüber einem oberen Teil der Endstruktur, an welchem das Seil befestigt ist. Wenn die Zuglast einen Schwellwert erreicht, wird ein Aktuator ausgelöst und eine Warnleuchte leuchtet auf.

In KR 100 988 762 B1 betrifft ein Sicherheitssystem für einen Bühnenausrüstungsaufzug mit einer Einheit zur Messung einer Seilspannung und einer Steuerung zum Stoppen eines Motors.

US 6,073,496 A offenbart eine weitere Hebevorrichtung. An einem oberen Ende eines zylindrischen Rohres ist ein Kopfteil mit einer Öse montiert. In einem unteren Bereich des Rohres ist ein in einer Längsrichtung in dem Rohr verschiebbarer Schlitten angeordnet, der über einen Lastsensor mit einem Kopfteil verbunden ist. An dem Schlitten ist ein Haken befestigt.

Die Aufgabe der vorliegenden Erfindung besteht darin, eine Vorrichtung zu schaffen, die das Risiko des Abstürzens von Lasten bei Verwendung eines Abhängesystems vermindert und die korrekte Einrichtung des Abhängesystems vereinfacht.

Die obige Aufgabe wird gelöst durch einen Lasthalter für ein Abhängesystem zum Abhängen von Lasten mit den Merkmalen des Anspruchs 1.

Der Lasthalter umfasst Befestigungsmittel zum Befestigen eines Aufhängemoduls und/oder ein Aufhängemodul an einem ersten Ende des Lasthalters;
eine Lastaufnahmevorrichtung an einem zweiten Ende des Lasthalters, welches dem ersten Ende entlang einer Längsrichtung des Lasthalters abgewandt ist;
ein Nivelliermodul zur Verstellung einer Länge des Lasthalters in der Längsrichtung; und
ein Messmodul zur Messung einer Zuglast zwischen der Lastaufnahmevorrichtung und dem ersten Ende.

Da der Lasthalter selbst das Messmodul aufweist, kann die Zuglast jederzeit gemessen werden. Die Messung der Zuglast ist schon beim Einrichten und Anpassen des Abhängesystems möglich und insbesondere bereits während des Hochziehens der Last und auch während des Herablassens der Last möglich. Der vorliegende Lasthalter ermöglicht eine kontinuierliche und/oder regelmäßige Messung der Zuglast. Die Zuglast kann insbesondere die gesamte Gewichtskraft oder ein Anteil der gesamten Gewichtskraft der an dem Lasthalter angehängten Last sein.

Ein Überschreiten einer bestimmten Zuglast wird jederzeit einfach, sicher und zuverlässig detektiert. Wenn mehrere Lasthalter verwendet werden, gilt das für jeden der Lasthalter. Auch unvorhergesehene Änderungen der Lastverteilung zwischen einzelnen Lasthaltern werden einfach, sicher, schnell und zuverlässig erkannt.

Bei der vorliegenden Erfindung sind sowohl das Messmodul als auch das Nivelliermodul in den Lasthalter integriert. Der Lasthalter vereinfacht somit den Aufbau und die Einrichtung des Abhängesystems. Beim Einrichten und Anpassen des Abhängesystems müssen weniger Komponenten angeliefert, installiert, verbunden, aufeinander abgestimmt und geprüft werden. Entsprechend ist auch der Abbau einfacher. Gemäß einem weiteren Aspekt ermöglicht der Lasthalter einfachere und kompaktere Abhängesysteme mit weniger Teilen.

Wie erwähnt erlaubt das Nivelliermodul eine Verstellung der Länge des Lasthalters. Somit erlaubt das Nivelliermodul eine Ausbalancierung der Lastverteilung in dem Abhängesystem und eine Feinjustierung der Position der angehängten Last und/oder Zwischentraverse. Häufig reichen schon kleine Längenänderungen für eine merkliche Änderung der Lastverteilung.

Das Nivelliermodul erlaubt die kontrollierte, gezielte Verstellung der Länge des Lasthalters. Mit anderen Worten erlaubt es die kontrollierte, gezielte Einstellung der Länge des Lasthalters. Innerhalb eines Einstellbereichs für die Länge des Lasthalters kann die Länge des Lasthalters gezielt auf eine gewünschte Länge eingestellt werden. Die aktive, kontrollierte, gezielte Verstellung der Länge und damit Einstellung auf die gewünschte Länge erlaubt die einfache, sichere und zuverlässige Feinjustierung und Ausbalancierung der Lastverteilung im Abhängesystem. Die eingestellte Länge ändert sich (zumindest im Wesentlichen) nicht (von selbst) in Abhängigkeit von der Last, die auf den Lasthalter wirkt. Die Einstellung der Länge ist in diesem Sinne lastunabhängig.

Bei Verwendung des Lasthalters in dem Abhängesystem müssen daher die Längen von Seilen und/oder Ketten des Abhängesystems selsbt nicht zur Ausbalancierung und Feinjustierung verändert werden. Das vereinfacht und beschleunigt die Einrichtung und Anpassung des Abhängesystems zum Aufhängen der Last enorm. Zudem erhöht die Vermeidung der Änderung von Längen von Drahtseilen und/oder Ketten die Sicherheit, da damit einhergehende Fehlbedienungen vermieden werden.

Insbesondere ist das Nivelliermodul zu einer Verstellung der Länge des Lasthalters unter Last eingerichtet. Mit dem Lasthalter kann also in dem Abhängesystem auch während des Hochziehens einer Last und nach Hochziehen der Last eine Ausrichtung der Last verändert werden. Der Lasthalter erlaubt die Feinjustierung und/oder Ausbalancierung ohne Herablassen der Last.

Zusammengefasst sorgt der Lasthalter für eine höhere Sicherheit und vereinfacht die korrekte Einrichtung des Abhängesystems. Insbesondere vermindert er das Risiko des Abstürzens von Lasten bei Verwendung des Abhängesystems und vereinfacht die Ausbalancierung und Feinjustierung.

Der Lasthalter kann beispielsweise für die Veranstaltungstechnik, Bühnentechnik und/oder Messetechnik eingesetzt werden.

Der Lasthalter ist auch für Ablastungen oberhalb eines Bedieners nutzbar. Der Personenschutz ist sichergestellt.

Der Lasthalter ist für vertikal hängende Lasten geeignet. Das bedeutet, dass eine Zugrichtung (zumindest im Wesentlichen) parallel zu einer Richtung der Gravitation ist. Darüber hinaus ist der Lasthalter auch für schräg hängende Lasten geeignet. Das bedeutet, dass die Zugrichtung einen Winkel von bis zu ±60° zu der Richtung der Gravitation aufweisen kann.

In einer Weiterbildung der Erfindung weist der Lasthalter einen Drahtseilhalter als das Aufhängemodul auf. Damit lässt sich der Lasthalter einfach und sicher an einem darüber liegenden Hängepunkt aufhängen. Drahtseilhalter sind für hohe Lasten geeignet und sehr zuverlässig. Drahtseile sind tendenziell weniger deutlich sichtbar und flexibler als Ketten. Zudem sind sie weniger anfällig für Geräusche bei Luftströmungen und bieten weniger Windangriffsfläche als Ketten.

Alternativ oder zusätzlich weist der Lasthalter bevorzugt ein Kettenzug-Eingriffsmittel als das Aufhängemodul auf. Damit lässt sich der Lasthalter einfach und sicher an einem darüber liegenden Hängepunkt aufhängen. Mit Ketten bzw. Kettenzügen lassen sich auch hohe Zuglasten einfach und kostengünstig bewältigen. Ketten sind verglichen zu Drahtseilen tendenziell robuster gegenüber Korrosion und weniger schmutzanfällig. Sie sind leichter für spezifische Längen anpassbar.

Bevorzugt weist der Lasthalter das Befestigungsmittel zum lösbaren Befestigen des Aufhängemoduls an dem ersten Ende des Lasthalters auf. Das Befestigungsmittel kann an dem Nivelliermodul und/oder an dem Messmodul angeordnet sein, beispielsweise als ein Innengewinde oder als ein Außengewinde.

Besonders bevorzugt weist der Lasthalter das Befestigungsmittel und mindestens ein Aufhängemodul auf, beispielsweise den Drahtseilhalter und/oder das Kettenzug-Eingriffsmittel. Das Aufhängemodul ist lösbar an dem Befestigungsmittel befestigbar, beispielsweise durch eine Schraubverbindung. Als lösbar befestigtes Kettenzug-Eingriffsmittel kommen beispielsweise eine Ringschraube oder eine Ringmutter infrage.

Überaus bevorzugt umfasst der Lasthalter den lösbar befestigbaren Drahtseilhalter und das lösbar befestigbare Kettenzug-Eingriffsmittel. Dann kann situationsgerecht entweder der Drahtseilhalter oder das Kettenzug-Eingriffsmittel an dem Befestigungsmittel befestigt werden und zur Aufhängung des Lasthalters genutzt werden.

Das Aufhängemodul kann integral an dem Nivelliermodul oder an dem Messmodul befestigt sein. Es kann beispielsweise angeschweißt sein. In dieser Ausführungsform ist natürlich kein zusätzliches Befestigungsmittel zum lösbaren Befestigen des Aufhängemoduls notwendig. Entsprechend kann das Befestigungsmittel bei dieser Ausführungsform entfallen. Dadurch wird eine mögliche Quelle für Fehlbedienungen oder für die Verwendung nicht zueinander passender Teile vermieden. Allerdings vermindern sich die Modularität und Flexibilität.

Bevorzugt ist das Nivelliermodul an dem Messmodul befestigt. Besonders bevorzugt ist das Nivelliermodul lösbar an dem Messmodul befestigt. Beispielsweise kann das Nivelliermodul mittels einer Gewindeverbindung lösbar an dem Messmodul lösbar befestigt sein. Es kann aber vorgesehen sein, dass das Nivelliermodul mittels der Gewindeverbindung an dem Messmodul befestigt ist und zusätzlich verklebt ist. Das verhindert ein unbeabsichtigtes Lösen des Nivelliermoduls von dem Messmodul. Die Verklebung kann so eingerichtet sein, dass Sie mit erhöhtem Kraftaufwand überwunden werden kann. Dadurch können die beiden Teile, wenn es notwendig ist, dennoch voneinander gelöst werden, beispielsweise zum Austausch eines der Teile.

Die Lastaufnahmevorrichtung kann unmittelbar an dem Messmodul oder unmittelbar an dem Nivelliermodul befestigt sein, bevorzugt lösbar. Beispielsweise kann die Lastaufnahmevorrichtung mit dem Messmodul oder mit dem Nivelliermodul verschraubt sein. Das sorgt für eine hohe Modularität und Flexibilität. Die Lastaufnahmevorrichtung kann leicht ausgewechselt werden. Es können beispielsweise Lastaufnahmevorrichtungen unterschiedlichen Typs mit demselben Lasthalter verwendet werden. Es kann auch vorgesehen sein, dass die Lastaufnahmevorrichtung mittels einer Gewindeverbindung mit dem Messmodul oder dem Nivelliermodul und zusätzlich verklebt ist. Das verhindert ein unbeabsichtigtes Lösen des Nivelliermoduls von dem Messmodul. Die Verklebung kann so eingerichtet sein, dass Sie mit erhöhtem Kraftaufwand überwunden werden kann. Dadurch können die beiden Teile, wenn es notwendig ist, dennoch voneinander gelöst werden, beispielsweise zum Austausch eines der Teile.

In einer Weiterbildung der Erfindung ist das Messmodul in der Längsrichtung zwischen der Lastaufnahmevorrichtung und dem Nivelliermodul angeordnet. Dadurch ist das Messmodul so nahe wie möglich an der Lastaufnahmevorrichtung positioniert. Wenn der Lasthalter aufgehängt ist, ist das Messmodul besonders gut sichtbar. Eine weiter unten beschriebene optische Warnvorrichtung ist dadurch gegebenenfalls besonders gut und einfach von unten erkennbar. Zudem kann das Messmodul für Wartungs-, Test und/oder Diagnosezwecke besonders einfach von unten erreicht werden. Beispielsweise können gegebenenfalls vorhandene Batterien oder Akkumulatoren des Messmoduls einfacher ausgetauscht werden, wenn der Lasthalter an einem Haltepunkt aufgehängt ist.

Gemäß einem anderen Aspekt ist eine zweite Anordnung in der Reihenfolge Lastaufnahmevorrichtung, Messmodul, Nivelliermodul und gegebenenfalls Aufhängemodul entlang der Längsrichtung (von unten nach oben, wenn der Lasthalter hängt) besonders bevorzugt. Das Nivelliermodul ist quer der Längsrichtung schmaler als das Messmodul. Bei der ersten Anordnung ist das Messmodul verhältnismäßig weit weg von dem Aufhängemodul positioniert. Das Messmodul verdeckt bei dieser Anordnung den Blick (leicht seitlich) von unten auf das Aufhängemodul am wenigsten. Der Blick von unten auf die Lastaufnahmevorrichtung ist ohnehin problemlos möglich. Es kann also besonders einfach mit einem Blick geprüft werden, ob sowohl die Aufhängung des Lasthalters mittels des Aufhängemoduls, beispielsweise an einer Zwischentraverse des Abhängesystems, und die Aufhängung der eigentlichen Last an der Lastaufnahmevorrichtung des Lasthalters korrekt sind.

Alternativ ist beispielsweise die folgende, dritte Anordnung entlang der Längsrichtung möglich (von unten nach oben, wenn der Lasthalter hängt): Lastaufnahmevorrichtung, Nivelliermodul, Messmodul und gegebenenfalls Aufhängemodul. Bei dieser Anordnung ist das Nivelliermodul besonders einfach von unten zu erreichen und einzustellen. Das vereinfacht das Einstellen des Nivelliermoduls nach dem Aufhängen der Last.

Besonders bevorzugt ist der Lasthalter derart modular aufgebaut, dass er sich zwischen der ersten Anordnung, der zweiten Anordnung und der dritten Anordnung umrüsten lässt.

Das Nivelliermodul umfasst:
eine Mittelhülse;
ein erstes Ausdrehmodul, das über eine erste Gewindeverbindung in Eingriff mit der Mittelhülse steht und an einer ersten Seite der Mittelhülse in der Längsrichtung mit einem ersten Überstand aus der Mittelhülse hervorsteht, wobei der erste Überstand durch Drehung der Mittelhülse relativ zu dem ersten Ausdrehmodul veränderbar ist; und
ein zweites Ausdrehmodul, das über eine zweite Gewindeverbindung in Eingriff mit der Mittelhülse steht und an einer zweiten Seite der Mittelhülse in der Längsrichtung, die der ersten Seite abgewandt ist, mit einem zweiten Überstand aus der Mittelhülse hervorsteht, wobei der zweite Überstand durch Drehung der Mittelhülse relativ zu dem zweiten Ausdrehmodul veränderbar ist.

Besonders bevorzugt weisen die erste Gewindeverbindung und die zweite Gewindeverbindung entgegengesetzte Gewinderichtungen auf. In einer ersten Ausführungsform ist die erste Gewindeverbindung als Linksgewinde ausgebildet und die zweite Gewindeverbindung als Rechtsgewinde ausgebildet. In einer zweiten Ausführungsform ist die erste Gewindeverbindung als Rechtsgewinde ausgebildet und die zweite Gewindeverbindung als Linksgewinde ausgebildet. Dadurch können durch Rotation der Mittelhülse (relativ zu dem ersten Ausdrehmodul und dem zweiten Ausdrehmodul) um die Längsrichtung in einer ersten Rotationsrichtung sowohl das erste Ausdrehmodul als auch das zweite Ausdrehmodul gleichzeitig weiter aus der Mittelhülse herausgedreht werden. Somit vergrößern sich in einem einzigen Arbeitsschritt gleichzeitig der erste Überstand und der zweite Überstand. Entsprechend können durch Rotation der Mittelhülse (relativ zu dem ersten Ausdrehmodul und dem zweiten Ausdrehmodul) um die Längsrichtung in einer zweiten Rotationsrichtung, die der ersten Rotationsrichtung entgegengesetzt ist, sowohl das erste Ausdrehmodul als auch das zweite Ausdrehmodul gleichzeitig weiter in die Mittelhülse eingedreht werden. Somit verringern sich in einem einzigen Arbeitsschritt gleichzeitig der erste Überstand und der zweite Überstand. Wenn Gewindesteigungen der ersten Gewindeverbindung und der zweiten Gewindeverbindung gleich sind, führt eine vollständige der Mittelhülse also zum doppelten Hub im Vergleich zu einer Ausführung mit nur einer Gewindeverbindung. Folglich lassen sich eine Länge des Nivelliermoduls in der Längsrichtung und damit die Länge des gesamten Lasthalters in der Längsrichtung sehr einfach, sehr schnell und sehr sicher verstellen. Die Längenverstellung funktioniert auch unter Last.

Gemäß einem anderen Aspekt weist eine Umfangsfläche der Mittelhülse besonders bevorzugt einen Maulschlüsselbereich auf. Der Maulschlüsselbereich ist zum Eingriff mit einem Schlüsselmaul eines Maulschlüssels eingerichtet. Dadurch kann die Mittelhülse leicht um die Längsrichtung rotiert werden.

Das erste Ausdrehmodul auf einer der Mittelhülse zugewandten Seite in der Längsrichtung ein Hülseneingriffselement mit einem Außengewinde für die erste Gewindeverbindung, wobei das Hülseneingriffselement des ersten Ausdrehmoduls einen Ausdrehschutz umfasst, der verhindert, dass das erste Ausdrehmodul vollständig aus der Mittelhülse ausgedreht werden kann.

Alternativ oder zusätzlich umfasst das zweite Ausdrehmodul auf einer der Mittelhülse zugewandten Seite in der Längsrichtung ein Hülseneingriffselement mit einem Außengewinde für die zweite Gewindeverbindung, wobei das Hülseneingriffselement des zweiten Ausdrehmoduls einen Ausdrehschutz umfasst, der verhindert, dass das zweite Ausdrehmodul vollständig aus der Mittelhülse ausgedreht werden kann.

Besonders bevorzugt umfasst das erste Ausdrehmodul auf der der Mittelhülse zugewandten, zweiten Seite in der Längsrichtung das Hülseneingriffselement mit dem Außengewinde für die erste Gewindeverbindung, und auf einer der Mittelhülse abgewandten, ersten Seite in der Längsrichtung einen Flansch, wobei an diesem Flansch das Befestigungsmittel zum lösbaren Befestigen des Aufhängemoduls ausgebildet ist oder das Aufhängemodul ausgebildet ist. In einer anderen Anordnung kann das Befestigungsmittel ggf. zum Befestigen des Messmoduls dienen. An dem Flansch kann zusätzlich ein Maulschlüsselbereich ausgebildet sein. Das Befestigungsmittel kann beispielsweise ein Innengewinde oder ein Außengewinde umfassen. Wenn das Befestigungsmittel ein Innengewinde umfasst, ist optional in einer Außenwand des Befestigungsmittels mit dem Innengewinde eine Gewindebohrung entlang einer radialen Richtung, die senkrecht zur Längsrichtung ist, für eine Sicherheitsschraube vorgesehen.

Überaus bevorzugt umfasst das Hülseneingriffselement des ersten Ausdrehmoduls einen Ausdrehschutz. Der Ausdrehschutz verhindert, dass das Hülseneingriffselement und damit das erste Ausdrehmodul vollständig aus der Mittelhülse ausgedreht werden können. Dadurch ist die erste Gewindeverbindung gesichert. Der Ausdrehschutz vermeidet Abstürze der Last und erhöht dadurch die Sicherheit.

Besonders bevorzugt umfasst das zweite Ausdrehmodul auf der der Mittelhülse zugewandten, ersten Seite in der Längsrichtung das Hülseneingriffselement mit dem Außengewinde für die zweite Gewindeverbindung, und auf einer der Mittelhülse abgewandten, zweiten Seite in der Längsrichtung einen Flansch, wobei an diesem Flansch das Befestigungsmittel zum lösbaren Befestigen des Messmoduls und/oder der Lastaufnahmevorrichtung ausgebildet ist. An dem Flansch kann zusätzlich ein Maulschlüsselbereich ausgebildet sein. Das Befestigungsmittel kann beispielsweise ein Innengewinde oder ein Außengewinde umfassen. Wenn das Befestigungsmittel ein Innengewinde umfasst, ist optional in einer Außenwand des Befestigungsmittels mit dem Innengewinde eine Gewindebohrung entlang einer radialen Richtung, die senkrecht zur Längsrichtung ist, für eine Sicherheitsschraube vorgesehen.

Überaus bevorzugt umfasst das Hülseneingriffselement des zweiten Ausdrehmoduls einen Ausdrehschutz. Der Ausdrehschutz verhindert, dass das Hülseneingriffselement und damit das zweite Ausdrehmodul vollständig aus der Mittelhülse ausgedreht werden können. Dadurch ist die zweite Gewindeverbindung gesichert. Der Ausdrehschutz vermeidet Abstürze der Last und erhöht dadurch die Sicherheit.

In einer bevorzugten Ausführungsform weist das Messmodul eine Last-Messzelle auf. Es kann sich um eine digitale Last-Messzelle handeln. Die Last-Messzelle ist eine einfache, platzsparende, zuverlässige und kostengünstige Möglichkeit, die Zuglast zu messen. Die Last-Messzelle kann mindestens einen Dehnungsmessstreifen aufweisen. Die Messung kann mittels einer Widerstandsmessbrücke erfolgen. Insbesondere kann die Last-Messzelle eine Dehnungsmessstreifen-Vollbrücke aufweisen. Die Last-Messzelle kann einen Z-förmigen Grundkörper aufweisen. Vorzugsweise besteht der Grundkörper aus Aluminium bzw. einer Aluminiumlegierung.

Bevorzugt umfasst der Lasthalter eine optische Warnvorrichtung, welche eine optische Lastwarnung anzeigt, wenn die gemessene Zuglast eine Lastgrenze übersteigt und/oder eine optische Maximallastwarnung anzeigt, wenn die gemessene Zuglast eine Maximallastgrenze übersteigt.

Die Maximallastwarnung zeigt dem Benutzer unmissverständlich an, dass die Maximallastgrenze überschritten wurde und erhöht dadurch die Sicherheit.

Besonders bevorzugt ist Maximallastgrenze vorgebbar. Das bedeutet, die vorgebbare Maximallastgrenze ist einstellbar bzw. konfigurierbar. Die Maximallastgrenze kann beispielsweise programmierbar sein.

Wie erwähnt liegt eine Haltelast eines Hängepunkts häufig in einem Bereich der Gewichtskraft einer Masse mit 50 kg bis 150 kg. Allerdings unterscheiden sich die Haltelasten für die Hängepunkte an verschiedenen Veranstaltungsorten sehr stark. Teilweise unterscheiden sich die Haltlasten sogar für verschiedene Hängepunkte an demselben Standort, beispielsweise in derselben Messehalle. In dieser Ausführungsform ist die vorgebbare Maximallastgrenze für die Maximallastwarnung einstellbar. Der Benutzer kann die vorgebbare Maximallastgrenze beispielsweise auf die zulässige Hängelast des jeweiligen Hängepunkts einstellen. Das erhöht einerseits die Sicherheit. Andererseits ist der Lasthalthalter inklusive der passenden Lastwarnung universell für Hängepunkte mit unterschiedlichen Hängelasten einsetzbar. Das erhöht die Flexibilität des Lasthalters beträchtlich.

Die optische Maximallastwarnung kann eine rote Leuchtanzeige umfassen, beispielsweise mindestens eine rote LED. Die rote Farbe signalisiert klar, dass ein kritischer Lastzustand erreicht wurde.

Überaus bevorzugt kann die Maximallastgrenze maximal so hoch vorgegeben werden wie eine zulässige Arbeitslast des Lasthalters. Es kann sein, dass die Hängepunkte an einem Standort besonders robust ausgeführt sind. Ihre maximale Zuglast übersteigt dann die zulässige Arbeitslast des Lasthalters. Durch die beschriebene Funktionalität wird verhindert, dass die zulässige Arbeitslast des Lasthalters überschritten wird, ohne dass die Maximallastwarnung angezeigt wird. Zudem wird der Benutzer bereits im Voraus auf die Problematik aufmerksam gemacht, wenn er vergeblich versucht, die Maximallastgrenze auf einen Wert größer als die zulässige Arbeitslast einzustellen.

Gemäß einem anderen Aspekt kann die optische Warnvorrichtung dazu eingerichtet sein, die Maximallastwarnung unabhängig von der Maximallastgrenze anzuzeigen, wenn die gemessene Zuglast die zulässige Arbeitslast des Lasthalters übersteigt. Selbst falls keine Maximallastgrenze vorgegeben oder vorgebbar ist, wird bei Überschreiten der zulässigen Arbeitslast dennoch die Maximallastwarnung ausgegeben.

Die optische Lastwarnung unterscheidet sich von der optischen Maximallastwarnung. Beispielsweise kann sich eine Farbe der optischen Lastwarnung von einer Farbe der optischen Maximallastwarnung unterscheiden.

Die optische Lastwarnung kann eine gelbe Leuchtanzeige umfassen, beispielsweise mindestens eine gelbe LED. Die gelbe Farbe signalisiert, dass ein bedenklicher Lastzustand erreicht wurde.

Die Lastgrenze kann vorgebbar sein, insbesondere als ein absoluter Wert, als ein wählbarer Prozentanteil der Maximallastgrenze und/oder durch Vorgabe einer Differenz, um welche die Lastgrenze kleiner ist als die Maximallastgrenze.

Der für die Lastgrenze vorgebbare Wert kann durch die Maximallastgrenze nach oben beschränkt sein.

Alternativ oder zusätzlich kann der Lasthalter dazu eingerichtet sein, die Lastgrenze basierend auf der Maximallastgrenze automatisch einzustellen. Insbesondere kann die Lastgrenze automatisch ein festgelegter Prozentanteil der Maximallastgrenze sein, beispielsweise neunzig Prozent. Alternativ kann die Lastgrenze automatisch dem Wert der Maximallastgrenze abzüglich eines festen Werts entsprechen, beispielsweise die Maximallastgrenze abzüglich 0,1 kN. Wenn die Maximallastgrenze vorgebbar ist und verstellt wird, verstellt sich die Lastgrenze dementsprechend automatisch.

In einer bevorzugten Ausführungsform umfasst die optische Warnvorrichtung ein optisches Freigabesignal. Wenn die Lastgrenze vorhanden ist, zeigt die optische Warnvorrichtung das Freigabesignal nur an, wenn die gemessene Zuglast kleiner ist als die vorgegebene Lastgrenze. Wenn die Maximallastgrenze vorhanden ist, zeigt die optische Warnvorrichtung das Freigabesignal nur an, wenn die gemessene Zuglast kleiner ist als die Maximallastgrenze.

Das optische Freigabesignal unterscheidet sich von den übrigen optischen Anzeigen der optischen Warnvorrichtung (beispielsweise von der optischen Maximallastwarnung und der optischen Lastwarnung) beispielsweise in der Leuchtfarbe.

Das optische Freigabesignal kann eine grüne Leuchtanzeige umfassen, beispielsweise mindestens eine grüne Leuchtdiode. Die grüne Farbe signalisiert, dass die Lasthalterung eingeschaltet ist und dass ein unbedenklicher Lastzustand vorliegt.

Insbesondere kann die optische Warnvorrichtung eine ampelartige Anzeige umfassen: Die grüne Leuchtanzeige für das optische Freigabesignal, die gelbe Leuchtanzeige für die optische Lastwarnung und die rote Leuchtanzeige für die optische Maximallastwarnung.

Zusammengefasst kann die optische Warnvorrichtung dazu eingerichtet sein, eine begrenzte Anzahl verschiedener Lastzustände in eindeutiger Weise und leicht unterscheidbar optisch anzuzeigen. Solch eine Anzeige ist jederzeit ablesbar und einfach verständlich, sogar für nicht qualifizierte und/oder nicht besonders geschulte Personen.

In einer Weiterbildung zeigt die optische Warnvorrichtung eine optische Überlastwarnung an, sobald die gemessene Zuglast eine vorgegebene Überlastgrenze überschritten hat. Die Überlastwarnung bleibt also auch bestehen, wenn die gemessene Zuglast wieder sinkt. Alternativ oder zusätzlich kann der Lasthalter dazu eingerichtet sein, die Überlastwarnung zu speichern. Dadurch wird verhindert, dass ein überlasteter Lasthalter, der eventuell Schaden genommen hat, aus Versehen weiter oder erneut verwendet wird. So wird ein wirksamer Schutz vor Schäden durch Versagen des Lasthalters durch Überlast erreicht.

Die optische Überlastwarnung unterscheidet sich von den Anzeigen der optischen Warnvorrichtung für die anderen Lastzustände. Beispielsweise kann die optische Überlastwarnung durch gleichzeitiges Blinken der grünen Leuchtanzeige, der gelben Leuchtanzeige und der roten Leuchtanzeige erfolgen.

Die Überlastgrenze kann beispielsweise einem Vielfachen der zulässigen Arbeitslast des Lasthalters entsprechen, insbesondere dem Doppelten der zulässigen Arbeitslast des Lasthalters.

Es kann vorgesehen sein, dass die Überlastwarnung nicht oder nur durch qualifizierte Personen ausgeschaltet und/oder gelöscht werden kann. Beispielsweise kann der Lasthalter derart eingerichtet sein, dass zum Deaktivieren der Überlastwarnung und/oder zur Löschung der Überlastwarnung im Speicher ein festgelegter Code erforderlich ist. Auf diese Weise ist sichergestellt, dass der Lasthalter nach Überschreiten der Überlastgrenze verschrottet oder nur nach Inspektion und Freigabe von einer der qualifizierten Personen wieder zur Benutzung freigegeben wird. Schadhafte Lasthalter können aus dem Verkehr gezogen werden und noch einsatzfähige Lasthalter können erneut verwendet werden. Letzteres spart Kosten und Ressourcen.

Die optische Warnvorrichtung kann beispielsweise in dem Messmodul angeordnet sein. Bevorzug ist die optische Warnvorrichtung von der zweiten Seite aus zu sehen. Die optische Warnvorrichtung ist von unten sichtbar, wenn der Lasthalter an einem Hängepunkt befestigt ist. Überaus bevorzug ist die optische Warnvorrichtung von der zweiten Seite aus (von unten) innerhalb eines Kegels um die Längsrichtung mit einem halben Öffnungswinkel von mindestens 25°, noch bevorzugter mindestens 40°, außerordentlich bevorzugt mindestens 80° sichtbar. Die Spitze des gedachten Kegels ist dabei in dem Lasthalter angeordnet und der gedachte Kegel öffnet sich auf der Seite des zweiten Endes des Lasthalters (nach unten). Wenn der Lasthalter an einem Hängepunkt befestigt ist, ist die optische Warnvorrichtung also sowohl senkrecht von unten als auch schräg zur Längsrichtung von unten sichtbar. Dadurch fallen die optische Lastwarnung und/oder die optische Maximallastwarnung eher auf. Zudem kann der Benutzer bei einer Verwendung von mehreren Lasthaltern nebeneinander und/oder hintereinander von einem Standort aus alle optischen Warnvorrichtungen der mehreren Lasthalter gleichzeitig überprüfen. "Mehrere" bedeutet im Sinne dieser Offenbarung immer "mindestens zwei".

In einer besonders bevorzugten Ausführungsform umfasst der Lasthalter Eingabemittel zur Einstellung der vorgebbaren Maximalgrenze und/oder der vorgebbaren Lastgrenze. Die Einstellmittel können beispielsweise ein Touchpad, mindestens einen Knopf, und/oder mindestens einen Regler (wie beispielsweise einen Drehregler) umfassen. Im Allgemeinen ist es allerdings nicht erforderlich, dass der Lasthalter Eingabemittel aufweist. Beispielsweise kann alternativ oder zusätzlich eine Programmierung bzw. Einstellung der vorgebbaren Maximallastgrenze und/oder der vorgebbaren Lastgrenze mittels eines Datenübertragungsmoduls vorgesehen sein (siehe weiter unten).

Alternativ oder zusätzlich umfasst der Lasthalter eine akustische Warnvorrichtung, welche eine akustische Lastwarnung ausgibt, wenn die gemessene Zuglast die Lastgrenze übersteigt, und/oder eine akustische Maximallastwarnung ausgibt, wenn die gemessene Zuglast die Maximallastgrenze übersteigt.

Die akustische Maximallastwarnung unterscheidet sich von der akustischen Lastwarnung. Die akustische Maximallastwarnung und die akustische Lastwarnung können sich beispielsweise in einer Lautstärke, Tonhöhe und/oder in einer Tonfolge unterscheiden.

Die zur optischen Warnvorrichtung aufgeführten Ausführungsformen und Vorteile gelten entsprechend für die akustische Warnvorrichtung.

Die akustische Warnvorrichtung kann beispielsweise einen Lautsprecher, ein Signalhorn und/oder eine Sirene aufweisen.

Insbesondere bietet sich eine akustische Maximallastwarnung an, um auf die Gefahr durch Überschreiten der Maximallastgrenze eindringlich hinzuweisen. Beispielsweise kann die akustische Maximallastwarnung mit der optischen Warnvorrichtung mit einer optischen Lastwarnung und einer optischen Maximallastwarnung kombiniert werden.

In einer bevorzugten Ausführungsform ist ein Endteil der Lastaufnahmevorrichtung an dem zweiten Ende um 360° entlang der Längsrichtung drehbar. Das Endteil ist zur Verbindung mit einem lasteinbringenden Element vorgesehen.

Beispielsweise weist die Lastaufnahmevorrichtung einen Ring, einen Schäkel oder einen Haken auf, der um 360° um die Längsrichtung drehbar ist. Es kann sich beispielsweise um einen D-Ring handeln. Diese Ausführungsformen erlauben ein schnelles, einfaches, und sicheres Einhängen der Last an den Lasthalter. Insbesondere kann die Lastaufnahmevorrichtung ein Drehgelenk aufweisen, wobei der Ring, Schäkel oder Haken über das Drehgelenk an dem Lasthalter befestigt ist.

Durch das frei drehende Endteil, beispielsweise durch den frei drehenden Ring, Schäkel oder Haken, wird die Einleitung von Quer- und Scherkräften auf den Lasthalter vermieden. Das erhöht die Zuverlässigkeit, die Sicherheit und die Aussagekraft der von der Messzelle gemessenen Zuglast.

Bevorzugt weist das Messmodul ein Elektronikmodul auf. Beispielsweise ist das Elektronikmodul dazu eingerichtet, die Daten der Last-Messzelle auszulesen und/oder auszuwerten. Das Elektronikmodul kann beispielsweise eine Prozessoreinheit und ein Speichermodul aufweisen. Es kann beispielsweise dazu eingerichtete sein, festzustellen, ob die gemessene Last die vorgebbare Lastgrenze, die Maximallastgrenze und/oder die Überlastgrenze überschreitet. Es kann ferner dazu eingerichtet sein, die optische Warnvorrichtung und/oder die akustische Warnvorrichtung wie oben beschrieben anzusteuern. Die optische Warnvorrichtung kann integral mit dem Elektronikmodul ausbildet sein. Alternativ oder zusätzlich kann die akustische Warnvorrichtung integral mit dem Elektronikmodul ausgebildet sein.

In einer Weiterbildung ist das Speichermodul nicht zugänglich in einem Gehäuse eingeschlossen. Dadurch werden Manipulationen und Löschungen der in dem Speichermodul gespeicherten Daten verhindert.

Besonders bevorzugt ist der Lasthalter dazu eingerichtet, die Zuglast regelmäßig zu messen. Alternativ oder zusätzlich ist der Lasthalter dazu eingerichtet, den Lastzustand regelmäßig über die optische Warnvorrichtung und/oder die akustische Warnvorrichtung mitzuteilen.

Überaus bevorzugt ist ein Zeitintervall für jeweils aufeinanderfolgende Messungen vorgebbar, beispielsweise programmierbar. Die Ausführungsformen betreffend die Einstellbarkeit bzw. Programmierbarkeit der vorgegebenen Lastgrenze gelten jeweils entsprechend. Die Messung in regelmäßigen Zeitintervallen spart einerseits Strom und bietet andererseits eine dauerhafte Überwachung der Zuglast und damit eine dauerhafte Sicherheit.

Besonders bevorzugt ist das Elektronikmodul dazu eingerichtet, die gemessene Zuglast und/oder den Lastzustand kontinuierlich und/oder in Zeitintervallen zu protokollieren, insbesondere abzuspeichern. So wird eine fortdauernde Dokumentation ermöglicht. Veränderungen der gemessenen Zuglast werden über den gesamten Zeitraum einer Veranstaltung dokumentiert.

Die Dokumentation kann beispielsweise in dem Speichermodul abgelegt werden.

Gemäß einem anderen Aspekt weist der Lasthalter eine Stromspeicher-Aufnahme und/oder ein Stromspeichermodul auf. Das Stromspeichermodul kann beispielsweise eine eingebaute Batterie oder ein eingebauter Akkumulator sein. Die Stromspeicher-Aufnahme dient zur Aufnahme mindestens eines Stromspeichermoduls. Die Stromspeicher-Aufnahme kann beispielsweise als ein Batteriefach ausgebildet sein. Auf diese Weise sind die Batterien bzw. Akkumulatoren leicht austauchbar. Die Stromspeicher-Aufnahme kann beispielsweise eine öffenbare Abdeckung aufweisen. Die Stromspeicher-Aufnahme bzw. das mindestens eine Stromspeichermodul dient zur Versorgung des Messmoduls mit elektrischer Energie. Die Abdeckung kann beispielsweise an dem Gehäuse des Messmoduls anschraubbar sein. Das verhindert ein unbeabsichtigtes Öffnen der Abdeckung.

Wenn das Stromspeichermodul einen oder mehrere Akkumulatoren umfasst, beträgt eine Akkulaufzeit des Lasthalters im laufenden Betrieb vorzugsweise mindestens 24 Stunden, noch besser mindestens 14 Tage. Dadurch kann der Lasthalter über einen Tag bzw. über die gesamte Länge einer Veranstaltung kontinuierlich ohne äußere Stromversorgung betrieben werden.

Überaus bevorzugt weist der Lasthalter ein Lademodul zum Laden des Stromspeichers aus. In einer Weiterbildung ist das Lademodul derart eingerichtet, dass der Stromspeicher mittels des Lademoduls von außen induktiv aufgeladen werden kann. Beispielsweise kann dann das Gehäuse des Messmoduls vollständig gekapselt und absolut wasserdicht sein. Das erhöht die Zuverlässigkeit, gerade im Außeneinsatz.

Gemäß einem anderen Aspekt kann das Messmodul alternativ oder zusätzlich einen Stromanschluss zur Zuführung von elektrischem Strom von außen aufweisen. Beispielsweise kann der Stromanschluss zum Anschluss eines XLR-Steckers zur Stromversorgung konfiguriert sein, beispielsweise für zum Anschluss eines zweipoligen XLR-Steckers oder eines vierpoligen XLR-Steckers. Solche Anschlüsse haben sich in der Veranstaltungstechnik bewährt.

In einer Weiterbildung der Erfindung weist der Lasthalter einen Ruhezustand (Stand-By-Zustand) auf. Der Lasthalter kann in den Ruhezustand gebracht werden, um Strom zu sparen. Der Lasthalter kann aus dem Ruhezustand aufgeweckt werden. Dann wechselt der Lasthalter in einen Betriebsmodus. Der Lasthalter kann eine Betätigungsvorrichtung an dem Gehäuse aufweisen, um den Lasthalter in den Ruhezustand zu bringen bzw. den Lasthalter aus dem Ruhezustand aufzuwecken. Die Betätigungsvorrichtung kann beispielsweise einen Drucktaster umfassen.

Bevorzugt weist der Lasthalter ein Datenübertragungsmodul auf. Das Datenübertragungsmodul kann zur Übertragung der gemessenen Zuglast und/oder eines Lastzustandes des Lasthalters eingerichtet sein, wobei der Lastzustand zumindest anhand der gemessenen Zuglast sowie der Lastgrenze und/oder der Maximallastgrenze bestimmt wird.

Insbesondere kann das Datenübertragungsmodul zur kabellosen Übertragung
- der gemessenen Zuglast,
- eines Lastzustandes des Lasthalters,
- der gemessenen Temperatur, und/oder
- eines Ladestatus des Stromspeichers
eingerichtet sein.

Besonders bevorzugt kann das Datenübertragungsmodul noch andere Daten kabellos senden und/oder empfangen.

Das Datenträgerübertragungsmodul kann beispielsweise zur kabellosen Übertragung in mindestens einem frei zugänglichen Frequenzbereich eingerichtet sein, beispielsweise um 868 MHz (SRD-Band Europa) und/oder 915 MHz (ISM-Band, Region 2). Als Drahtlosnetzwerk-Standard können insbesondere Bluetooth-Low-Energy (BLE), Long-Range-Wide-Area-Network (LoRa) und/oder ZigBee implementiert sein.

Gemäß einem Aspekt ist das Datenübertragungsmodul besonders bevorzugt zur bidirektionalen Kommunikation eingerichtet. Das bedeutet, dass das Datenübertragungsmodul sowohl zum Senden von Daten als auch zum Empfangen von Daten eingerichtet ist.

Gemäß einem anderen Aspekt ist der Lasthalter kabellos (bzw. kontaktlos) programmierbar. Insbesondere kann das Elektronikmodul kabellos programmierbar sein.

Der Lasthalter kann dazu eingerichtet sein, dass die Lastgrenze, die Maximallastgrenze und/oder die Überlastgrenze mittels des Datenübertragungsmoduls programmierbar sind.

Alternativ oder zusätzlich ist der Lasthalter überaus bevorzugt dazu eingerichtet, dass er mittels des Datenübertragungsmoduls kabellos in den Ruhezustand gefahren werden kann und/oder aus dem Ruhezustand aufgeweckt werden kann. So kann der Lasthalter auch aus der Entfernung gezielt gesteuert werden, um Strom zu sparen. Es ist nicht nötig, den Lasthalter zu demontieren oder einen Schalter direkt an dem Lasthalter zu betätigen, um den Ruhezustand zu aktivieren oder zu deaktivieren. Dazu müsste in vielen Fällen beispielsweise eine Leiter oder eine Hebebühne genutzt werden, wenn der Lasthalter eingesetzt ist.

Gemäß einem weiteren Aspekt ist das Messmodul bevorzugt kalibriert. Ein Messbereich kann vor der Auslieferung durch die Kalibrierung festgelegt werden. Die Kalibrierung kann zum Beispiel basierend auf einem Abfahren von Stützpunkten in einer Kennlinie erfolgen.

Vorzugsweise ist das Messmodul re-kalibrierbar. Durch die regelmäßige Re-Kalibrierung wird die Messgenauigkeit des Messmoduls sichergestellt. Durch die Re-Kalibrierung können systematische Messfehler, die sich mit der Zeit ergeben, wieder ausgeglichen werden. Das Messmodul ist entsprechend einstellbar. Besonders bevorzugt ist die Re-Kalibrierung programmierbar. Zur Re-Kalibrierung müssen also keine mechanischen Veränderungen an dem Messmodul vorgenommen werden. Das senkt die Kosten und vermeidet potentielle mechanische Fehlerquellen. Das Messmodul kann dazu eingerichtet sein, dass Re-Kalibrierungseinstellungen über das Datenübertragungsmodul vorgenommen werden können.

Überaus bevorzugt kann die Re-Kalibrierung nur von einer qualifizierten Person eingestellt werden. Beispielsweise kann das Messmodul dazu eingerichtet sein, die Re-Kalibrierung nur freizuschalten, wenn das Messmodul einen bestimmten Freischaltcode empfangen hat. Das Messmodul kann ferner dazu eingerichtet sein, bei Feststellung eines Manipulationsversuchs ohne Berechtigung in einen sicheren Zustand überzugehen. Das bedeutet, das Messmodul wird inaktiv geschaltet. Dafür kann das Elektronikmodul eine funktionale Sicherheitseinheit aufweisen. Zusätzlich kann die Anzeige einer entsprechenden Warnmeldung durch die optische Warnvorrichtung und/oder das Versenden einer Warnmeldung durch das Datenübertragungsmodul vorgesehen sein.

Überaus bevorzugt weist das Messmodul einen gesonderten Speicher für Kalibrierdaten auf. In dem Speicher für Kalibrierdaten können beispielsweise Referenzwerte gespeichert sein und/oder werden.

In einer Weiterbildung werden Änderungen der Kalibrierung bzw. Re-Kalibrierungen automatisch aufgezeichnet.

Gemäß einem anderen Aspekt weist das Messmodul bevorzugt das Gehäuse auf. In das Gehäuse können die Last-Messzelle, die optische Warnvorrichtung, die akustische Warnvorrichtung, das Elektronikmodul, das Datenübertragungsmodul, die Stromspeicher-Aufnahme und/oder der Stromspeicher aufgenommen sein. Das Gehäuse kann spritzwassergeschützt oder wasserdicht sein. Das erhöht die Zuverlässigkeit des Lasthalters und insbesondere des Messmoduls, besonders im Außeneinsatz.

Das Gehäuse ist bevorzugt zumindest teilweise aus Polyethylen (PE) und/oder Polyethylenterephthalat (PET) gefertigt.

Das Gehäuse kann zumindest bereichsweise in transparentem und/oder teiltransparentem Kunststoff ausführbar sein. Dadurch können zum Beispiel LEDs der optischen Warnvorrichtung im Inneren des Gehäuses geschützt angeordnet werden und ihr Leuchten ist gegebenenfalls dennoch von außen sichtbar.

Gemäß einem anderen Aspekt umfasst das Gehäuse in einer Weiterbildung mindestens zwei Gehäuseteile, die durch Schrauben zusammengehalten werden. Insbesondere kann es genau zwei Gehäusehälften aufweisen, die durch Schrauben zusammengehalten werden.

Besonders bevorzugt ist im Inneren eine zusätzliche Haltestruktur vorgesehen. Die optische Warnvorrichtung, die akustische Warnvorrichtung, der Temperatursensor, das Elektronikmodul und/oder die Stromspeicheraufnahme können an der Haltestruktur befestigt sein. Die Haltestruktur kann die Messzelle zumindest teilweise abdecken. Das schützt die Messzelle zusätzlich, insbesondere, wenn das Gehäuse geöffnet ist. Die Haltestruktur kann beispielsweise ein Blechteil mit einem U-förmigen Querschnitt handeln, wobei die Messzelle in einem Innenraum des Blechteils zwischen beiden Schenkelflächen angeordnet ist.

In einer Weiterbildung des Gehäuses weist das Gehäuse einen Stoßschutz auf. Der Stoßschutz kann aus einem elastischen Material gefertigt sein, beispielsweise aus Kautschuk bzw. Gummi. Insbesondere können elastische Stoßkissen an Kanten und/oder Ecken des Gehäuses angeordnet sein. Beim Auf- und Abbau des Lasthaltersystems ist der Lasthalter oft mechanischen Belastungen ausgesetzt. Der Stoßschutz verringert die Gefahr einer Beschädigung. Durch die elastische Ausführung des Stoßschutzes werden außerdem Stoßeinwirkungen gedämpft. Das mindert die Beschleunigung für die im Gehäuse angeordneten Element bei ruckartigen mechanischen Belastungen von außen auf das Gehäuse und verbessert somit die Haltbarkeit und Zuverlässigkeit des Lasthalters.

Alternativ oder zusätzlich weist der Lasthalter in einer Weiterbildung zumindest die Schutzart IP 44 nach EN 60529 auf, besonders bevorzugt IP 65.

Bevorzugt weist der Lasthalter eine zulässige Arbeitslast von mindestens 100 kg, besonders bevorzugt 160 kg, überaus bevorzugt mindestens 210 kg auf, beispielsweise 240 kg. Damit übersteigt die zulässige Arbeitslast die typischen Haltelasten von Hängepunkten. Der Lasthalter ist somit einerseits universell einsetzbar, andererseits aber nicht überdimensioniert.

Alternativ oder zusätzlich beträgt eine Bruchlast des Lasthalters mindestens das Zehnfache der zulässigen Arbeitslast. Dadurch ist ein ausreichender Sicherheitspuffer sichergestellt.

In einer Weiterbildung der Erfindung ist die Länge des Lasthalters in der Längsrichtung durch das Nivelliermodul unter Last um mindestens 3 cm verstellbar, besonders bevorzugt um mindestens 4 cm. Mit anderen Worten weist das Nivelliermodul einen unter Last um mindestens 3 cm verstellbaren Hub auf, besonders bevorzugt um mindestens 4 cm. Ein solcher Einstellbereich genügt in der Regel zur Feinjustierung und/oder zur Ausbalancierung der Last.

Alternativ oder zusätzlich ist die Länge des Lasthalters in der Längsrichtung durch das Nivelliermodul unter Last um maximal 10 cm verstellbar, besonders bevorzugt um maximal 5 cm. Mit anderen Worten weist das Nivelliermodul einen unter Last um maximal 10 cm verstellbaren Hub auf, besonders bevorzugt um maximal 5 cm. Durch die Begrenzung der Einstellmöglichkeit bleibt der Lasthalter kompakt, günstig, leicht und einfach zu bedienen.

Gemäß einem weiteren Aspekt weist der Lasthalter bevorzugt einen Betriebstemperaturbereich von mindestens -10 °C bis +60 °C auf, besonders bevorzugt von mindestens -10 °C bis +80 °C. Dadurch kann der Lasthalter bedenkenlos im Außenbereich eingesetzt werden. Zudem wird er auch bei starker Sonneneinstrahlung und schlechter Belüftung betriebsbereit bleiben.

In einer bevorzugten Ausführungsform weist das Messmodul alternativ oder zusätzlich einen Temperatursensor auf. Das Messmodul (insbesondere dessen Elektronikmodul) kann dazu eingerichtet sein, die von dem Temperatursensor erfassten Temperaturen in dem Speichermodul zu speichern. Alternativ oder zusätzlich kann das Datenübertragungsmodul dazu eingerichtet sein, die erfassten Temperaturen zu übertragen, vorzugsweise kabellos.

Die obige Aufgabe wird ferner gelöst durch ein Lasthaltersystem für ein Abhängesystem von Lasten mit mindestens einem Lasthalter nach einer der beschriebenen Ausführungsformen. Die Modifikationen und Vorteile gelten analog.

Das Lasthaltersystem weist ferner eine zentrale Überwachungseinheit mit einem Datenübertragungsmodul zur drahtlosen Kommunikation mit dem mindestens einen Lasthalter auf.

Die Überwachungseinheit dient dazu, die gemessenen Zuglast und/oder den Lastzustand aller der mindestens einen Lasthalter gleichzeitig zu überwachen.

Die Überwachungseinheit kann beispielsweise einen Personal Computer, ein Notebook, einen Tablet-Computer und/oder ein Smartphone umfassen.

Die Überwachungseinheit umfasst vorzugsweise eine Anzeige und ist dazu eingerichtet, die gemessene Zuglast und/oder den Lastzustand für alle des mindestens einen Lasthalters auf dem Bildschirm anzuzeigen. Die Anzeige kann beispielsweise einen Bildschirm und/oder eine Anordnung von Leuchtdioden umfassen. So kann der Benutzer auf einen Blick erkennen, ob sich einer oder mehrere Lasthalter in einem bedenklichen oder kritischen Lastzustand befinden. Besonders bevorzugt ist die Anzeige für eine Übersichtsdarstellung der Lastzustände aller der mindestens einen Lasthalter eingerichtet. Die Überwachungseinheit kann zu einer grafischen Darstellung des Aufbaus des Abhängesystems eingerichtet sein. Insbesondere kann in ihr ein Programmcode für diese Funktionalität gespeichert sein.

Wenn der mindestens eine Lasthalter die gemessene Zuglast an die Überwachungseinheit übermittelt, kann die Überwachungseinheit den Lastzustand - anstelle des mindestens einen Lasthalters oder zusätzlich zu dem mindestens einen Lasthalter - selbst anhand der gemessenen Zuglast ermitteln.

Alternativ oder zusätzlich weist die Überwachungseinheit Eingabemittel auf. Die Eingabemittel können beispielsweise eine Tastatur, einen Touchscreen, ein Touchpad, Knöpfe, Regler und/oder eine Computer-Maus umfassen.

In einer Weiterbildung ist die Überwachungseinheit dazu eingerichtet, die von dem mindestens einen Lasthalter empfangene gemessene Zuglast und/oder den von dem mindestens einen Lasthalter empfangenen Lastzustand kontinuierlich zu protokollieren, insbesondere abzuspeichern. Die Überwachungseinheit kann dazu eingerichtet sein, ferner weitere oder alle von dem mindestens einen Lasthalter empfangenen Daten zur protokollieren. Die Überwachungseinheit kann hierfür ein Speichermodul aufweisen. So wird eine fortdauernde Dokumentation in der Überwachungseinheit abgespeichert. Veränderungen der gemessenen Zuglast werden über den gesamten Zeitraum einer Veranstaltung dokumentiert.

In einer bevorzugten Ausführungsform ist die Überwachungseinheit zur Programmierung der Maximallastgrenze des mindestens einen Lasthalters eingerichtet. Dadurch kann die Maximallastgrenze einfach mittels der Überwachungseinheit eingestellt und verändert werden. Insbesondere ist eine zentrale Programmierung der Maximallastgrenzen mehrerer Lasthalter mittels der Überwachungseinheit möglich. Dadurch kann die Anpassung der Maximallastgrenzen zentral, sehr einfach und sehr schnell erfolgen. Alternativ oder zusätzlich kann die Überwachungseinheit zur Programmierung der Lastgrenze und/oder der Überlastgrenze des mindestens einen Lasthalters eingerichtet sein.

Bezüglich des Datenübertragungsmodul der Überwachungseinheit gelten die möglichen Modifikationen wie für das oben beschriebene Datenübertragungsmodul des Lasthalters analog.

Gemäß einem weiteren Aspekt ist die Überwachungseinheit dazu eingerichtet, die von dem mindestens einen Lasthalter empfangenen Daten per WLAN zur Verfügung zu stellen.

In einer bevorzugten Ausführungsform weist das Lasthaltersystem mehrere (mindestens zwei) Lasthalter auf. Die Überwachungseinheit und die mehreren Lasthalter bilden überaus bevorzugt ein Funknetzwerk aus. Um den Energiebedarf gering zu halten, kann eine Größe der übertragenen Datenpakete begrenzt sein.

Die Überwachungseinheit kann dazu eingerichtet sein, eine Temperaturverteilung und/oder ein Temperaturprofil der von den mehreren Lasthaltern gemessenen und von der Überwachungseinheit empfangenen Temperaturen auszuwerten, zu speichern und/oder anzuzeigen.

Die obige Aufgabe wird außerdem gelöst durch ein Abhängesystem von Lasten an mindestens einem Hängepunkt. Das Abhängesystem weist mindestens ein Drahtseil und/oder mindestens eine Kette auf. Ferner umfasst das Abhängesystem mindestens einen Lasthalter nach einer der beschriebenen Ausführungsformen und/oder ein Lasthaltersystem nach einer der beschriebenen Ausführungsformen. Die beschriebenen Modifikationen gelten entsprechend analog.

Bevorzugt umfasst das Abhängesystem ferner zumindest eine Zwischentraverse.

In einer Weiterbildung weist das Abhängesystem mehrere Drahtseile und/oder mehrere Ketten auf. Alternativ oder zusätzlich weist das Abhängesystem bevorzugt mehrere Lasthalter auf, die jeweils nach einer der beschriebenen Ausführungsformen ausgeführt sind.

Die Erfindung wird nachfolgend anhand von Ausführungsbeispielen und unter Bezugnahme auf die Figuren erläutert. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen:
- Fig. 1: eine Seitenansicht eines erfindungsgemäßen Lasthalters gemäß einer ersten Ausführungsform mit einem Nivelliermodul, einem Messmodul und einer Lastaufnahmevorrichtung, wobei eine Länge des Nivelliermoduls und damit eine Länge des Lasthalters in einer Längsrichtung minimal eingestellt sind;
- Fig. 2: eine Seitenansicht des Lasthalters aus Fig. 1, wobei eine Länge des Nivelliermoduls des Lasthalters und damit die Länge des Lasthalters in der Längsrichtung maximal eingestellt sind, indem ein erstes Ausdrehmodul und ein zweites Ausdrehmodul des Nivelliermoduls maximal aus einer Mittelhülse des Nivelliermoduls herausgedreht sind;

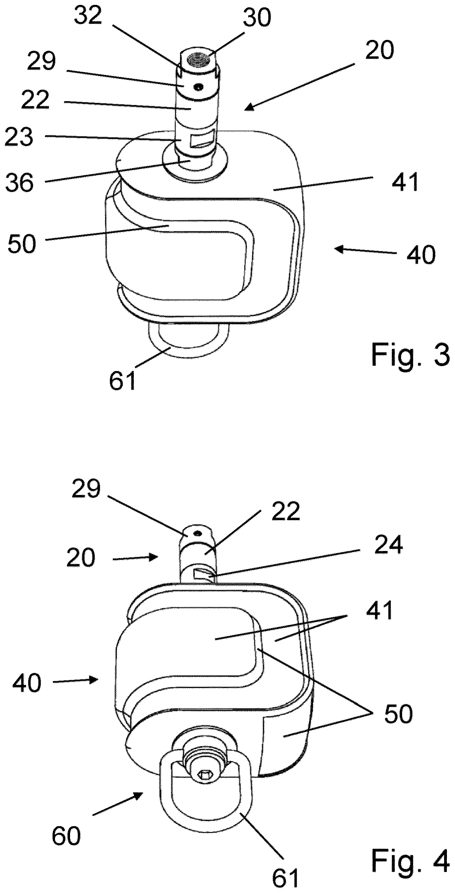

- Fig. 3: eine perspektivische Ansicht des Lasthalters aus Fig. 1 schräg von oben, in welcher ein Befestigungsmittel zum lösbaren Befestigen eines Aufhängemoduls an einem ersten Ende des Lasthalters besonders gut zu erkennen ist, wobei das Befestigungsmittel als Innengewinde in dem ersten Ausdrehmodul des Nivelliermoduls ausgebildet ist;
- Fig. 4: eine perspektivische Ansicht des Lasthalters aus Fig. 1 schräg von unten, in welcher die Lastaufnahmevorrichtung besonders gut zu erkennen ist;
- Fig. 5: schematisch einen Aufbau des Messmoduls des Lasthalters aus Fig. 1;
- Fig. 6: einen schematischen Längsschnitt des Nivelliermoduls des Lasthalters aus Fig. 1;
- Fig. 7: einen schematischen Längsschnitt einer weiteren Ausführungsform des Nivelliermoduls, in welcher an dem Flansch des ersten Ausdrehmoduls anstelle eines Innengewindes ein Außengewinde als das Befestigungsmittel zum lösbaren Befestigen des Aufhängemoduls ausgebildet ist;
- Fig. 8: eine perspektivische Ansicht eines erfindungsgemäßen Lasthalters gemäß einer zweiten Ausführungsform, wobei dieser Lasthalter zusätzlich einen Drahtseilhalter aufweist, der lösbar an einem der Lastaufnahmevorrichtung abgewandten Ende des Nivelliermoduls befestigt ist; und
- Fig. 9: ein Lasthaltersystem mit drei Lasthaltern gemäß der ersten Ausführungsform und einer zentralen Überwachungseinheit zur kabellosen Überwachung und Programmierung der Lasthalter.

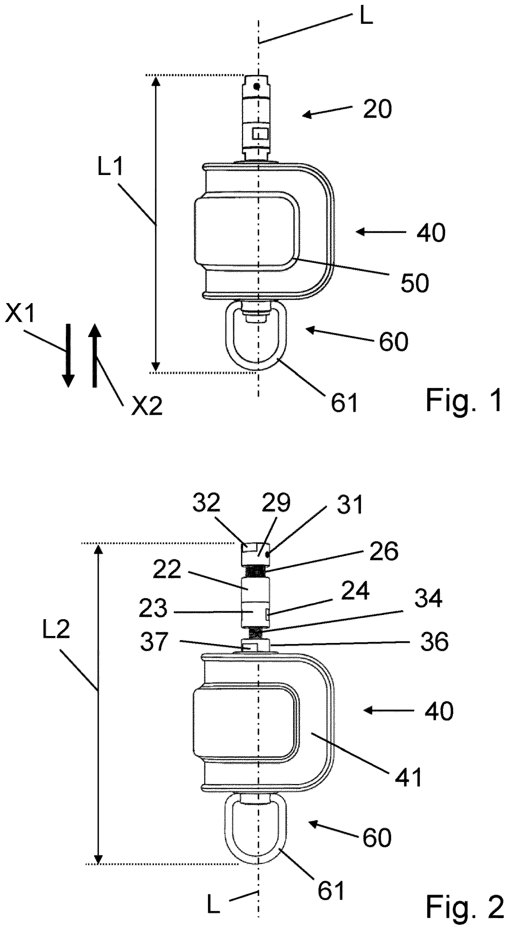

Ein in Fig. 1 gezeigter, erfindungsgemäßer Lasthalter 1 gemäß einer ersten Ausführungsform für ein Abhängesystem umfasst ein Nivelliermodul 20, ein Messmodul 40 und eine Lastaufnahmevorrichtung 60, welche entlang einer Längsrichtung L des Lasthalters 1 in dieser Reihenfolge unmittelbar aneinander befestigt sind.

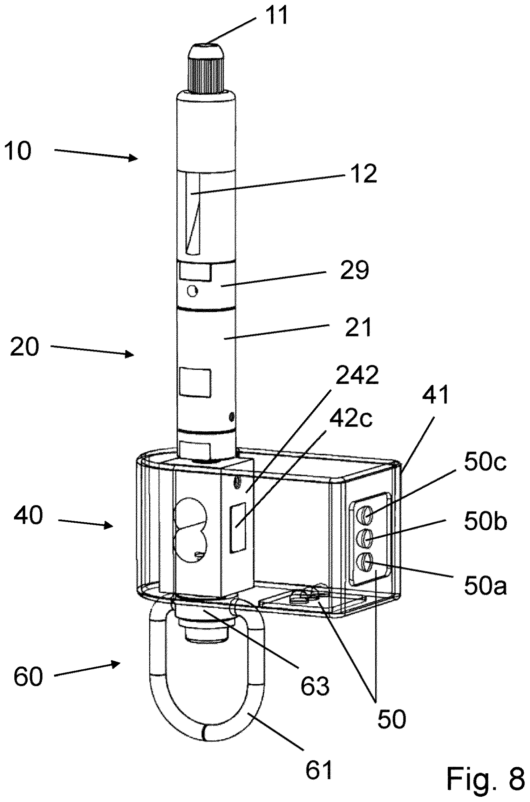

An einem ersten Ende des Lasthalters 1 in der Längsrichtung L, welches in dieser Ausführungsform durch ein erstes Ende (oberes Ende) des Nivelliermodul 20 in der Längsrichtung L gebildet ist, ist in ein Befestigungsmittel 30 zum lösbaren Befestigen eines Aufhängemoduls ausgebildet. In dieser Ausführungsform ist das Befestigungsmittel 30 als eine Gewindebohrung entlang der Längsrichtung L mit einem Innengewinde ausgebildet. Mittels des Innengewindes kann beispielsweise der in Fig. 8 gezeigte Drahtseilhalter 10 an dem oberen Ende des Nivelliermoduls 10 lösbar befestigt werden. Alternativ kann ein Kettenzug-Eingriffsmittel (nicht dargestellt) als Aufhängemodul an dem Befestigungsmittel 30 befestigt werden. Als ein solches Kettenzug-Eingriffsmittel kann beispielsweise eine Ringschraube verwendet werden. Die Ringschraube kann ähnlich wie der Drahtseilhalter 10 lösbar an dem Nivelliermodul 20 befestigt werden, indem sie in das als Innengewinde ausgebildete Befestigungsmittel 30 eingeschraubt wird.

An einem zweiten Ende des Lasthalters 1 in der Längsrichtung L, welches dem ersten Ende abgewandt ist, ist die Lastaufnahmevorrichtung 60 angeordnet.

Eine Richtung X1 ist parallel zu der Längsrichtung L und verläuft von dem ersten Ende zu dem zweiten Ende. Eine Richtung X2 ist ebenfalls parallel zu der Längsrichtung L und verläuft von dem zweiten Ende zu dem ersten Ende, also genau entgegengesetzt zu der ersten Richtung X1.

Das Messmodul 40 ist in der Längsrichtung L zwischen dem Nivelliermodul 20 und der Lastaufnahmevorrichtung angeordnet. Das Nivelliermodul 20 ist also an einem ersten Ende (oberen Ende) des Messmoduls 40 angeordnet und die Lastaufnahmevorrichtung 60 ist an einem zweiten (unteren Ende) des Messmoduls 40 angeordnet.

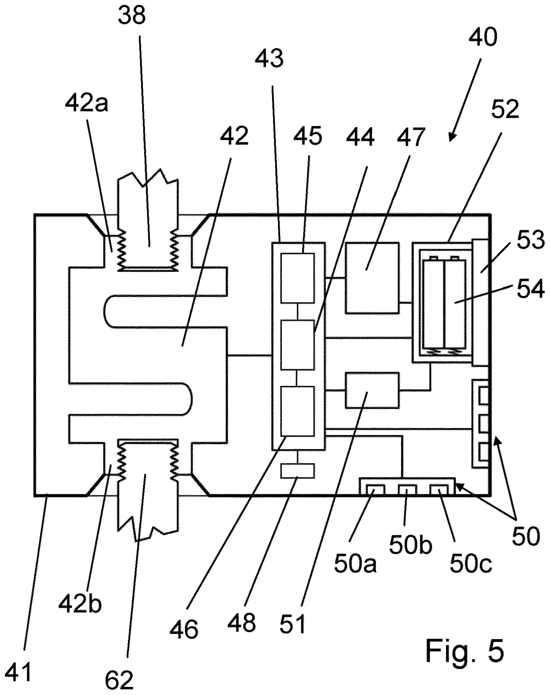

Die Lastaufnahmevorrichtung 60 ist lösbar an dem Messmodul 40 befestigt. Dazu weist die Lastaufnahmevorrichtung 60 ein Befestigungsmittel 62 auf und das Messmodul 40 weist ein entsprechendes Befestigungsmittel 42b auf. Hier ist das Befestigungsmittel 62 der Lastaufnahmevorrichtung 60 als Gewindebolzen ausgeführt. Das Befestigungsmittel 42b des Messmoduls 40 ist als dazu passendes Innengewinde ausgeführt. Genauer ist das Befestigungsmittel 42b des Messmoduls 40 integral mit einer Last-Messzelle 42 des Messmoduls 40 ausgebildet, und zwar an einem zweiten Ende (unteren Ende) der Last-Messzelle 42 (siehe Fig. 5).

Die Lastaufnahmevorrichtung 60 weist ferner einen D-förmigen Ring 61 auf. Der D-förmige Ring 61 ist über ein Drehgelenk 63 mit dem Befestigungsmittel 62 der Lastaufnahmevorrichtung 60 verbunden. Der D-förmige Ring 61 ist um die Längsrichtung L frei drehbar, also um 360°. Dadurch wird vermieden, dass Scher- und/oder Querkräfte auf das Messmodul 40 übertragen werden.

An dem D-förmigen Ring 61 können beispielsweise eine Zwischentraverse des Abhängesystems und/oder eine Last aufgehangen werden. Das Aufhängen kann mittelbar über Drahtseile und/oder Ketten des Abhängesystems erfolgen.

Das Nivelliermodul 20 ist ebenfalls lösbar an dem Messmodul 40 befestigt. Dazu weist das Nivelliermodul 20 ein Befestigungsmittel 38 auf und das Messmodul 40 weist ein entsprechendes Befestigungsmittel 42a auf. Hier ist das Befestigungsmittel 38 des Nivelliermoduls 20 als Gewindebolzen ausgeführt. Das Befestigungsmittel 42a des Messmoduls 40 ist als dazu passendes Innengewinde ausgeführt. Genauer ist das Befestigungsmittel 42a des Messmoduls 40 hier integral mit der Last-Messzelle 42 des Messmoduls 40 ausgebildet, und zwar an einem ersten Ende (oberen Ende) der Last-Messzelle 42 (siehe Fig. 5).

Das Lastaufnahmevorrichtung 60 ist entlang der Längsrichtung L nur über die Last-Messzelle 42 des Messmoduls 40 mit dem Nivelliermodul 20 verbunden. Dementsprechend werden alle in den D-förmigen Ring 61 eingeleiteten Zugkräfte über die Last-Messzelle 42 auf das Nivelliermodul 20 übertragen.

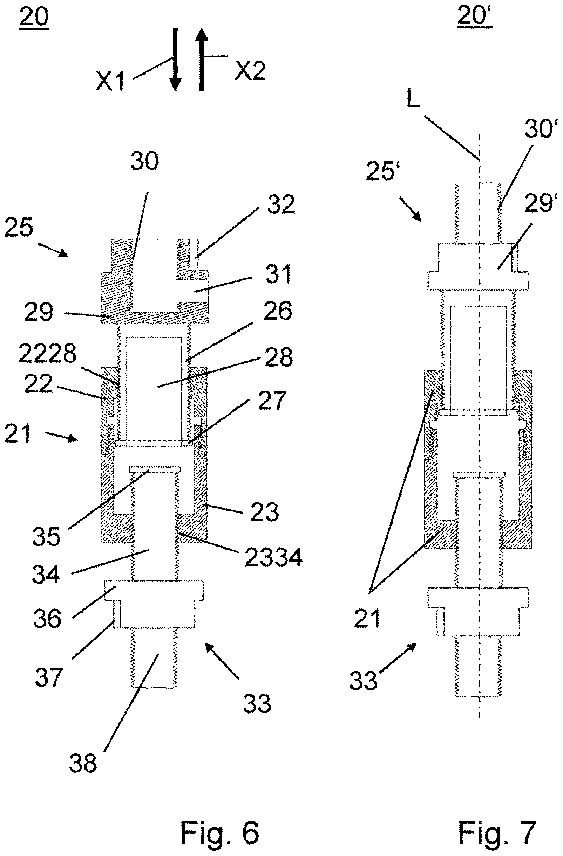

Der Aufbau des Nivelliermoduls 20 ist in einem in Fig. 6 gezeigten, schematischen Längsschnitt sichtbar.

Das Nivelliermodul umfasst eine Mittelhülse 21, ein erstes Ausdrehmodul 25 und ein zweites Ausdrehmodul 33

Die Mittelhülse 21 hat zumindest im Wesentlichen die Grundform eines Hohlzylinders mit Böden an den Enden in der Längsrichtung L.

In einem ersten Boden an einem ersten Ende (oberen Ende) der Mittelhülse 21 entlang der Längsrichtung L ist eine Gewindebohrung für eine erste Gewindeverbindung 2228 mit einem Hülseneingriffselement 26 des ersten Ausdrehmoduls 25 vorgesehen. Das Hülseneingriffselement 26 ist hier als Gewindebolzen ausgeführt und weist ein zu dieser Gewindebohrung passendes Außengewinde auf.

In einem zweiten Boden an einem zweiten ersten Ende (unteren Ende) der Mittelhülse 21 in der Längsrichtung L, welches dem ersten Ende der Mittelhülse 21 abgewandt ist, ist eine Gewindebohrung für eine zweite Gewindeverbindung 2334 mit einem Hülseneingriffselement 34 des zweiten Ausdrehmoduls 33 vorgesehen. Das Hülseneingriffselement 34 ist hier als Gewindebolzen ausgeführt und weist ein zu dieser Gewindebohrung passendes Außengewinde auf.

Das Hülseneingriffselement 26 des ersten Ausdrehmoduls 25 ist mittels der ersten Gewindeverbindung 2228 in die Mittelhülse 21 eingeschraubt. An einem zweiten Ende (unteren Ende) des Hülseneingriffselement 26, das in einen Innenraum der Mittelhülse 21 aufgenommen ist, ist ein Ausdrehschutz 27 befestigt. Der Ausdrehschutz 27 verhindert, dass das erste Ausdrehmodul 25 vollständig aus der Mittelhülse 21 herausgedreht werden kann.

Ein erstes Ende (oberes Ende) des ersten Ausdrehmoduls 25 steht mit einem ersten Überstand aus der Mittelhülse 21 hervor.

Indem die Mittelhülse 21 relativ zu dem ersten Ausdrehmodul 25 in einer ersten Drehrichtung um die Längsrichtung L gedreht wird, lässt sich das Hülseneingriffselement 26 weiter in die Mittelhülse 21 hineindrehen. Entsprechend verkürzen sich der erste Überstand und damit auch eine Gesamtlänge des Nivelliermoduls 20 und die Länge des gesamten Lasthalters 1. Indem die Mittelhülse 21 relativ zu dem ersten Ausdrehmodul 25 in einer zweiten Drehrichtung, die der ersten Drehrichtung entgegengesetzt ist, gedreht wird, lässt sich das Hülseneingriffselement 26 weiter aus der Mittelhülse 21 herausdrehen. Entsprechend vergrößern sich der erste Überstand und damit auch die Gesamtlänge des Nivelliermoduls 20 und die Länge des gesamten Lasthalters 1.

Das Hülseneingriffselement 34 des zweiten Ausdrehmoduls 33 ist mittels der zweiten Gewindeverbindung 2334 in die Mittelhülse 21 eingeschraubt. An einem ersten Ende (oberen Ende) des Hülseneingriffselement 34, das in den Innenraum der Mittelhülse 21 aufgenommen ist, ist ein Ausdrehschutz 35 befestigt. Der Ausdrehschutz 35 verhindert, dass das zweite Ausdrehmodul 33 vollständig aus der Mittelhülse 21 herausgedreht werden kann.

Ein zweites Ende (unteres Ende) des zweiten Ausdrehmoduls 33 steht mit einem zweiten Überstand aus der Mittelhülse 21 hervor. Der zweite Überstand ist an dem zweiten Ende der Mittelhülse 21, während der erste Überstand an dem davon abgewandten, ersten Ende der Mittelhülse 21 ist.

Die erste Gewindeverbindung 2228 und die zweite Gewindeverbindung 2334 weisen entgegengesetzte Gewinderichtungen auf.

Indem die Mittelhülse 21 relativ zu dem zweiten Ausdrehmodul 33 in der ersten Drehrichtung um die Längsrichtung L gedreht wird, lässt sich das Hülseneingriffselement 34 weiter in die Mittelhülse 21 hineindrehen. Entsprechend verkürzen sich der zweite Überstand und damit auch die Gesamtlänge des Nivelliermoduls 20 und die Länge des gesamten Lasthalters 1. Indem die Mittelhülse 21 relativ zu dem zweiten Ausdrehmodul 33 in der zweiten Drehrichtung gedreht wird, lässt sich das Hülseneingriffselement 34 weiter aus der Mittelhülse 21 herausdrehen. Entsprechend vergrößern sich der zweite Überstand und damit auch die Gesamtlänge des Nivelliermoduls 20 und die Länge des gesamten Lasthalters 1.

Eine Drehung der Mittelhülse 21 entlang der ersten Drehrichtung führt also gleichzeitig zu einer Vergrößerung des ersten Überstands und zu einer Vergrößerung des zweiten Überstands und eine Drehung der Mittelhülse 21 entlang der zweiten Drehrichtung führt gleichzeitig zu einer Verkleinerung des ersten Überstands und zu einer Verkleinerung des zweiten Überstands.

Eine Länge des Lasthalters 1 in der Längsrichtung L ist somit mittels des Nivelliermoduls 20 verstellbar, auch unter Last. Das bedeutet, dass die Längenverstellung insbesondere zur Feinjustierung der Ausrichtung einer an dem D-Ring 61 angehängten Last und/oder Zwischentraverse genutzt werden kann.

In Fig. 1 entspricht die Länge des Lasthalters 1 einer minimalen Länge L1. Das erste Ausdrehmodul 25 und das zweite Ausdrehmodul 33 sind soweit wie möglich in die Mittelhülse 21 eingedreht. Der Flansch 29 des ersten Ausdrehmoduls 25 liegt an der Mittelhülse 21 an und der Flansch 37 des zweiten Ausdrehmoduls 33 liegt an der Mittelhülse 21 an.

In Fig. 2 entspricht die Länge des Lasthalters 1 einer maximalen Länge L2. Das erste Ausdrehmodul 25 und das zweite Ausdrehmodul 33 sind soweit wie möglich aus der Mittelhülse 21 ausgedreht. Der Ausdrehschutz 27 des ersten Ausdrehmoduls 25 liegt an dem ersten Boden der Mittelhülse 21 an und der Ausdrehschutz 37 des zweiten Ausdrehmoduls 33 liegt an dem zweiten Boden der Mittelhülse 21 an.

An einer Umfangsfläche der Mittelhülse 21 ist ein Maulschlüsselbereich 24 ausgebildet (siehe beispielsweise Fig. 2). Letzterer ist zum Eingriff mit einem Schlüsselmaul eines Maulschlüssels eingerichtet. Dadurch kann die Mittelhülse 21 leicht um die Längsrichtung L gedreht werden.

In der vorliegenden Ausführungsform besteht die Mittelhülse 21 aus einem ersten Hülsenteil 22 (oberen Hülsenteil 22) und aus einem zweiten Hülsenteil 23 (unteren Hülsenteil 23). Die beiden Hülsenteile 22, 23 sind miteinander verschraubt. Dieser Aufbau der Mittelhülse 21 vereinfacht die Produktion des Nivelliermoduls 20, insbesondere unter Berücksichtigung der Ausdrehschutze 27 und 35.

Das Nivelliermodul 20 weist eine erste Längenskala auf, die zum Ablesen eingerichtet ist, wie weit das erste Ausdrehmodul 25 in der Längsrichtung L aus der Mittelhülse 21 ausgedreht ist. In dieser Ausführungsform ist die erste Längenskala auf einer Umfangsfläche des Hülseneingriffselements 26 angeordnet und erstreckt sich entlang der Längsrichtung L (nicht gezeigt). Analog weist das Nivelliermodul 20 eine zweite Längenskala auf, die zum Ablesen eingerichtet ist, wie weit das zweite Ausdrehmodul 33 in der Längsrichtung L aus der Mittelhülse 21 ausgedreht ist. In dieser Ausführungsform ist die zweite Längenskala auf einer Umfangsfläche des Hülseneingriffselements 34 angeordnet und erstreckt sich entlang der Längsrichtung L (nicht gezeigt).

In der vorliegenden Ausführungsform weist das Hülseneingriffselement 26 des ersten Ausdrehmoduls 25 einen Hohlraum 28 auf, der sich zu der zweiten (unteren Seite) hin öffnet. Wenn das erste Ausdrehmodul 25 und das zweite Ausdrehmodul 26 ganz in die Mittelhülse 21 eingeschraubt sind, ist das erste Ende (obere Ende) des Hülseneingriffselements 34 des zweiten Ausdrehmoduls 33 in den Hohlraum 28 aufgenommen. Dadurch ist das Nivelliermodul 20 kompakter. In dieser Ausführungsform hat der Hohlraum 28 eine (zumindest im Wesentlichen) zylindrische Form.

Das erste Ausdrehmodul 25 weist einen Flansch 29 auf. Der Flansch 29 ist an einem ersten Ende (oberen Ende) des Hülseneingriffselements 26 des ersten Ausdrehmoduls 25 befestigt, welches dem zweiten Ende des Hülseneingriffselements 26 abgewandt ist. Insbesondere kann der Flansch 29 in einem Stück mit dem Hülseneingriffselement 26 ausgebildet sein.

An einem ersten Ende (oberen Ende) des ersten Ausdrehmodul 25, das der Mittelhülse 21 abgewandt ist, also an den Flansch 29, ist das Befestigungsmittel 30 zum lösbaren Befestigen des Aufhängemoduls ausgebildet. Wie zuvor beschrieben ist das Befestigungsmittel 30 in dieser Ausführung als eine Gewindebohrung entlang der Längsrichtung L mit einem Innengewinde ausgebildet.

In dem Flansch 29 ist ferner eine Gewindebohrung 31 für eine Sicherungsschraube (nicht gezeigt) zur Sicherung der Befestigung des Aufhängemoduls ausgebildet. Die Gewindebohrung 31 erstreckt sich (zumindest im Wesentlichen) entlang einer radialen Richtung quer zu der Längsrichtung durch eine Seitenwand des Flansches 29 hindurch.

Zudem weist der Flansch 29 einen Maulschlüsselbereich 32 auf. Der Maulschlüsselbereich 32 erleichtert das Festhalten des zweiten Ausdrehmoduls 33, wenn die Mittelhülse 21 gedreht wird und/oder wenn das Aufhängemodul ein- oder ausgeschraubt wird.

Das zweite Ausdrehmodul 33 weist einen Flansch 36 auf. Der Flansch 36 ist an einem zweiten Ende (unteren Ende) des Hülseneingriffselements 34 des zweiten Ausdrehmoduls 33 befestigt, welches dem ersten Ende des Hülseneingriffselements 34 abgewandt ist. Insbesondere kann der Flansch 36 in einem Stück mit dem Hülseneingriffselement 34 ausgebildet sein.

An einem zweiten Ende (unteren Ende) des zweiten Ausdrehmoduls 33, das der Mittelhülse 21 abgewandt ist, also an dem Flansch 36, ist das Befestigungsmittel 38 ausgebildet. Wie zuvor beschrieben ist das Befestigungsmittel 38 des Nivelliermoduls 20 als Gewindebolzen ausgeführt und in das Befestigungsmittel 42a der Last-Messzelle 42 des Messmoduls 40 eingeschraubt (siehe Fig. 5).

Zudem weist der Flansch 36 einen Maulschlüsselbereich 37 auf. Der Maulschlüsselbereich 37 erleichtert das Ein- und Ausschrauben des als Gewindebolzen ausgebildeten Befestigungsmittels 38. Außerdem erleichtert er das Festhalten des zweiten Ausdrehmoduls 33, wenn die Mittelhülse 21 gedreht wird.

In einer Modifikation können das Nivelliermodul 20 und das Messmodul 40 entlang der Längsrichtung vertauscht angeordnet sein (nicht gezeigt). Das Nivelliermodul 20 kann einfach in Längsrichtung L umgedreht sein. Das als Außengewinde ausgebildete Befestigungsmittel 62 der Lastaufnahmevorrichtung 60 ist dann mit dem als Innengewinde ausgebildeten Befestigungsmittel 30 des Nivelliermoduls 20 lösbar verschraubt. Das als Innengewinde ausgebildete Befestigungsmittel 42a des Messmoduls 40 stellt dann das Befestigungsmittel zum lösbaren Befestigen des Aufhängemoduls dar.

Fig. 7 zeigt ein modifiziertes Nivelliermodul 20'. Das Nivelliermodul 20' entspricht in Aufbau und Funktion im Wesentlichen dem in Fig. 6 gezeigten Nivelliermodul 20. Es werden deshalb für gleiche Elemente dieselben Bezugszeichen verwendet und nur die Unterschiede erläutert.

Bei dem Nivelliermodul 20' ist das Befestigungsmittel 30' an einem Flansch 29' eines ersten Ausdrehmoduls 25' als Gewindebolzen ausgebildet. Es eignet sich zur Befestigung einer Ringmutter als Aufhängemodul. Entsprechend ist in dem Flansch 29' keine Gewindebohrung für eine Sicherungsschraube vorgesehen.

Das Messmodul 40 dient zur Messung der Zuglast. Ein Aufbau des Messmoduls 40 für die in Fig. 1 gezeigte, erste Ausführungsform des Lasthalters 1 sowie für die in Fig. 8 gezeigte, zweite Ausführungsform des Lasthalters 200 ist in Fig. 6 schematisch dargestellt.

Das Messmodul 40 weist ein zumindest wasserabweisend abgedichtetes Gehäuse 41 auf. In dem Gehäuse 41 sind die Last-Messzelle 42, ein Elektronikmodul 43, ein Datenübertragungsmodul 47, ein Temperatursensor 48, eine optische Warnvorrichtung 50, eine akustische Warnvorrichtung 51, und eine Stromspeicher-Aufnahme 52 angeordnet.

Die Stromspeicher-Aufnahme 52 ist als Batteriefach ausgebildet. In das Batteriefach sind mehrere Stromspeichermodule 54 aufgenommen. Die Stromspeicher-module 54 können Batterien oder Akkumulatoren sein. Das Batteriefach ist durch eine Abdeckung 53 nach außen verschlossen. Die Abdeckung 53 kann geöffnet werden, um die Stromspeicher-Module 54 auszutauschen. Die Stromspeicher-Module 54 versorgen das Messmodul 40 mit elektrischer Energie. Eine Batterie- bzw. Akkulaufzeit des Messmoduls 40 beträgt im Betrieb mindestens vierzehn Tage.

Die Stromspeicher-Aufnahme 52 ist in dieser Ausführungsform mit dem Elektronikmodul 43, dem Datenübertragungsmodul 47 und der akustischen Warnvorrichtung 51 unmittelbar verbunden. Die Stromspeicher-Aufnahme 52 kann zusätzlich mit anderen Elementen des Messmoduls unmittelbar verbunden sein, beispielsweise mit der optischen Warnvorrichtung 50, dem Temperatursensor 48 und/oder der Last-Messzelle 42.

Die Last-Messzelle weiset eine im Wesentlichen Z-förmige Grundform auf und ist aus einer Aluminiumlegierung gefertigt. Wie zuvor erwähnt weist die Last-Messzelle 40 an dem ersten Ende in der Längsrichtung L das Befestigungsmittel 42a für das Nivelliermodul 20 und an dem zweiten Ende in der Längsrichtung L das Befestigungsmittel für die Lastaufnahmevorrichtung 60 auf.

Die Last-Messzelle 42 weist ferner zumindest einen Dehnungsmessstreifen 42c auf (in Fig. 6 nicht gezeigt, siehe aber Fig. 8). Die Messung der Zuglast erfolgt in dieser Ausführungsform mittels einer Dehnungsmessstreifen-Vollbrücke.

Das Elektronikmodul 43 umfasst eine Prozessoreinheit 44 und zumindest eine Speichereinheit 45. Die Speichereinheit 45 ist im Inneren des Gehäuse 41 angeordnet und somit vor Zugriff und Manipulationen geschützt. Des Weiteren weist das Elektronikmodul 43 eine Sicherheitseinheit 46 auf. Die Sicherheitseinheit 46 sorgt dafür, dass bestimmte Funktionen des Messmoduls 40 nur nach Eingabe eines festgelegten Berechtigungscodes freigeschaltet werden, beispielsweise eine Re-Kalibrierungsfunktion.

Die Last-Messzelle 42, das Datenübertragungsmodul 47, der Temperatursensor 48, die optische Warnvorrichtung 50 und die akustische Warnvorrichtung 51 sind mit dem Elektronikmodul 43 verbunden.

Die Last-Messzelle 42 und der Temperatursensor 48 werden von dem Elektronikmodul 43 ausgelesen. Das Elektronikmodul 43 umfasst eine Uhreinheit (nicht gezeigt), die das aktuelle Datum und die aktuelle Uhrzeit zur Verfügung stellt. Das Elektronikmodul 43 speichert die gemessenen Zuglasten und Temperaturen zumindest zusammen mit dem Datum und der Uhrzeit in der Speichereinheit 45. Dadurch werden die gemessenen Zuglasten und Temperaturen fortschreitend dokumentiert. Das Elektronikmodul 43 stellt außerdem einen Ladezustand der Stromspeicher-Module 54 fest.

Das Elektronikmodul sendet die gemessenen Zuglasten und Temperaturen sowie den Ladezustand an das Datenübertragungsmodul 47.

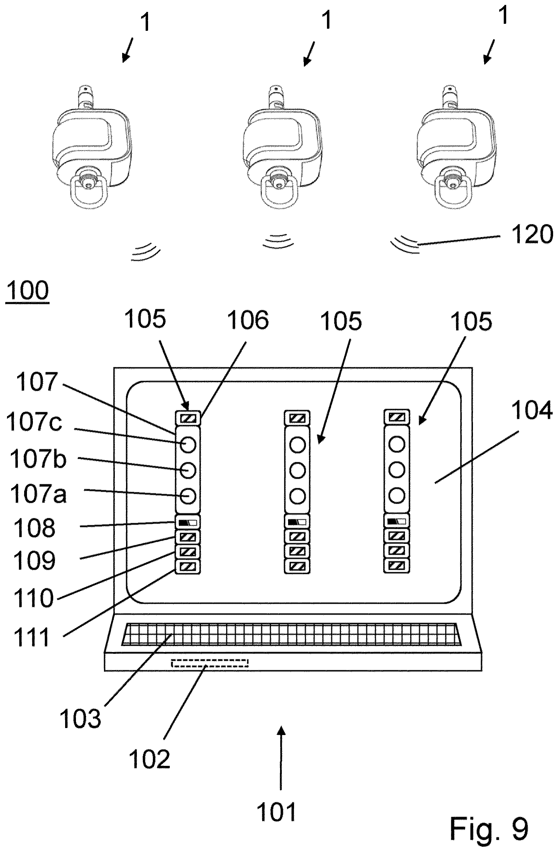

Das Datenübertragungsmodul 47 ist zur kontaktlosen Datenübertragen zwischen dem Messmodul 40 und einem Datenträgermodul 102 einer zentralen Überwachungseinheit 100 (siehe Fig. 9) eingerichtet. Es übertragt die gemessenen Zuglasten und Temperaturen sowie den Ladezustand kontaktlos an die zentrale Überwachungseinheit 100.

Das Datenübertragungsmodul 47 ist als Transceiver ausgeführt. Es ist zur bidirektionalen Datenübertragung eingerichtet. Über das Datenübertragungsmodul 47 kann das Elektronikmodul 43 kontaktlos programmiert werden. Außerdem kann der Lasthalter 1 über das Datenübertragungsmodul 47 kabellos in einen Ruhezustand versetzt werden und aus dem Ruhezustand kabellos in einen Betriebszustand aufgeweckt werden. In dem Ruhezustand führt der Lasthalter 1 keine Messung der Zuglast durch. Der Lastzustand wird nicht ermittelt. Die optische Warnvorrichtung 50 und die akustische Warnvorrichtung 51 sind im Ruhezustand deaktiviert. Entsprechend sendet das Datenübertragungsmodul 47 im Ruhezustand weder die gemessene Zuglast noch den Lastzustand. Es bleibt jedoch empfangsbereit für den Empfang eines Aufwecksignals, beispielsweise von der zentralen Überwachungseinheit 101.

Insbesondere können eine Maximallastgrenze und Lastgrenze programmiert werden. Die Maximallastgrenze und die Lastgrenze werden in der Speichereinheit 45 gespeichert. In der Speichereinheit 45 sind außerdem eine fest vorgegebene zulässige Arbeitslast des Lasthalters 1 und/oder eine Überlastgrenze gespeichert. Die Überlastgrenze beträgt bevorzugt das Doppelte der zulässigen Arbeitslast. Es kann also genügen, nur einen der beiden Werte zu speichern.

Die Lastgrenze und die Maximallastgrenze sind jeweils vorgebbar. Als die Maximallastgrenze kann beispielsweise an die zulässige Haltelast eines Hängepunkts an einer Decke einer Messehalle eingestellt werden, wenn der Lasthalter 1 Zuglasten auf diesen Hängepunkt übertragen soll. Die Lastgrenze kann beispielsweise auf einen Wert eingestellt werden, der achtzig Prozent der Maximallastgrenze entspricht.

Das Elektronikmodul 43 ermittelt anhand der gemessenen Zuglast, der Lastgrenze und der Maximallastgrenze einen Lastzustand des Lasthalters.

Wenn die gemessene Zuglast kleiner ist als die Lastgrenze und die Maximallastgrenze, dann stellt das Elektronikmodul 43 einen unbedenklichen Lastzustand fest. Wenn die gemessene Zuglast größer ist als die Lastgrenze, aber kleiner als die Maximallastgrenze, dann stellt das Elektronikmodul 43 einen bedenklichen Lastzustand fest. Wenn die gemessene Zuglast größer ist als die Maximallastgrenze und/oder die zulässige Arbeitslast des Lasthalters 1, dann stellt das Elektronikmodul einen kritischen Lastzustand fest.

Das Elektronikmodul 43 steuert die optische Warnvorrichtung 50 in Abhängigkeit von dem Lastzustand. Die optische Warnvorrichtung 50 umfasst ein optisches Freigabesignal, eine optische Lastwarnung und eine optische Maximallastwarnung.

Wenn der unbedenkliche Lastzustand festgestellt wird, zeigt die optische Warnvorrichtung 50 das optische Freigabesignal an. Das optische Freigabesignal ist eine grüne Leuchtanzeige. Anhand des optischen Freigabesignals ist klar erkennbar, dass der Lasthalter 1 eingeschaltet ist und kein bedenklicher oder kritischer Lastzustand vorliegt.

Wenn der bedenkliche Lastzustand festgestellt wird, zeigt die optische Warnvorrichtung 50 die optische Lastwarnung an. Die optische Lastwarnung ist eine gelbe Leuchtanzeige. Anhand der optischen Lastwarnung ist klar erkennbar, dass die gemessene Zuglast die Lastgrenze übersteigt. Bei entsprechender Einstellung der Lastgrenze weist die optische Lastwarnung daraufhin, dass die gemessene Zuglast die Maximallastgrenze fast erreicht hat. Dadurch wird ein Benutzer gewarnt, die Zuglast nicht noch weiter zu steigern.

Wenn der kritische Lastzustand festgestellt wird, zeigt die optische Warnvorrichtung 50 die optische Maximallastwarnung an. Die optische Maximallastwarnung ist eine rote Leuchtanzeige. Anhand der optischen Lastwarnung ist klar erkennbar, dass die gemessene Zuglast die Maximallastgrenze und/oder die zulässige Arbeitslast des Lasthalters 1 bzw. des Lasthalters 200 übersteigt. Der Benutzer kann daraufhin die Zuglast reduzieren und/oder entsprechende Sicherheitsvorkehrungen einleiten.

Die optische Warnvorrichtung ist zumindest von unten sichtbar, wenn der Lasthalter 1 aufgehangen ist.

In der ersten Ausführungsform des Lasthalters 1 erstreckt sich ein erster Anzeigebereich der optischen Warnvorrichtung 50 über einen Teil einer Unterseite des Gehäuses 41 und einen Teil einer Seitenfläche des Gehäuses 41. Ein zweiter Anzeigenbereich der optischen Warnvorrichtung 50 erstreckt sich bandartig über die übrigen Seitenflächen des Gehäuses 41. Die optische Warnvorrichtung 50 ist also sowohl von unten als auch von allen Seiten sichtbar.

In der schematischen Darstellung in Fig. 6 und in einer zweiten Ausführungsform des Lasthalters 200 in Fig. 8 ist ein erster Anzeigebereich der optischen Warnvorrichtung 50 an einer Unterseite des Gehäuses 41 angeordnet und ein zweiter Anzeigebereich an einer der Seitenflächen des Gehäuses 41 angeordnet. Es sind auch andere Gestaltungen und Positionierungen der optischen Warnvorrichtung 50 möglich.

In Fig. 6 und Fig. 8 weist jeder der Anzeigebereiche jeweils eine grüne Leuchtdiode (LED) 50a, eine gelbe LED 50b und eine rote LED 50c auf. Die grünen LEDs 50a dienen als grüne Leuchtanzeige für das optische Freigabesignal, die gelben LEDs 50b dienen als gelbe Leuchtanzeige für die optische Lastwarnung und die roten LEDs 50c dienen als rote Leuchtanzeige für die optische Maximallastwarnung.

Wenn die gemessene Zuglast die Überlastgrenze überschreitet, dann stellt das Elektronikmodul 43 einen Überlastzustand fest. Es steuert die optische Signalvorrichtung 50 an, eine optische Überlastwarnung anzuzeigen. Die optische Überlastwarnung unterscheidet sich von dem optischen Freigabesignal, der optischen Lastwarnung und der optischen Maximallastwarnung. Beispielsweise kann das Überlastsignal derart ausgebildet sein, dass die grüne Leuchtanzeige, die gelbe Leuchtanzeige und die rote Leuchtanzeige (also beispielsweise die grünen LEDs 50a, die gelben LEDs 50b und die roten LEDs 50c) gleichzeitig blinken. Zudem speichert das Elektronikmodul 43 in der Speichereinheit 45 ab, dass der Überlastzustand erreicht wurde.

Das optische Überlastsignal weist den Benutzer daraufhin, dass der Lasthalter 1 bzw. der Lasthalter 200 nicht mehr verwendet werden darf.

Das Elektronikmodul 43 steuert außerdem die akustische Warnvorrichtung 51 in Abhängigkeit von dem Lastzustand. Die akustische Warnvorrichtung 51 umfasst eine akustische Lastwarnung und eine akustische Maximallastwarnung.

Die akustische Lastwarnung und die akustische Maximallastwarnung unterscheiden sich. Die akustische Lastwarnung kann beispielsweise ein kurzer Warnton sein, der immer dann einmalig ertönt, wenn von dem unbedenklichen Lastzustand in den bedenklichen Lastzustand gewechselt wird. Die akustische Maximallastwarnung kann beispielsweise ein langer Warnton sein, der in regelmäßigen Zeitintervallen wiederholt wird, solange der kritische Lastzustand vorliegt.

Zusätzlich kann die akustische Warnvorrichtung 51 eine akustische Überlastwarnung ausgeben, wenn der Überlastzustand erreicht wird. Die akustische Überlastwarnung kann beispielsweise einen Sirenenton umfassen, der zumindest für eine gewisse Zeitdauer anhält.

In der Speichereinheit 45 kann ein Zeitintervall gespeichert sein. Das Zeitintervall ist über das Datenübertragungsmodul programmierbar, beispielsweise durch die zentrale Überwachungseinheit 101 in Fig. 9. Das Messmodul 40 misst in regelmäßigen Zeitabständen entsprechend dem Zeitintervall die Zuglast, stellt den Lastzustand fest, zeigt den Lastzustand über die optische Warnvorrichtung 50 an und gibt den Lastzustand gegebenenfalls zusätzlich über die akustische Warnvorrichtung 51 aus. Ferner speichert das Messmodul 40 die gemessene Zuglast, die gemessene Temperatur und den Ladezustand zusammen mit dem Datum und der Uhrzeit in der Speichereinheit 45 und sendet zumindest die gemessene Zuglast, die gemessene Temperatur sowie den Ladezustand über das Datenübertragungsmodul 47, beispielsweise an die zentrale Überwachungseinheit 101 in Fig. 9.

Wenn das Zeitintervall auf null eingestellt wird, arbeitet das Messmodul 40 kontinuierlich.

Fig. 8 zeigt eine zweite Ausführungsform eines erfindungsgemäßen Lasthalters 200. Der Lasthalter 200 entspricht in Aufbau und Funktion im Wesentlichen dem in Fig. 1 gezeigten Lasthalter 1. Es werden deshalb für gleiche Elemente dieselben Bezugszeichen verwendet und nur die Unterschiede erläutert.

Der Hauptunterschied besteht darin, dass der Lasthalter 200 in Fig. 8 zusätzlich einen Drahtseilhalter 10 als Aufhängemodul aufweist.

Der Drahtseilhalter 10 ist lösbar an dem Befestigungsmittel 30 des Nivelliermoduls 20 befestigt. Der Drahtseilhalter 10 weist dazu ein passendes Befestigungsmittel in Form eines Schraubbolzens (nicht gezeigt) auf. Ein Drahtseil kann durch eine zentrale Öffnung 11 an einem ersten Ende (oberen Ende) des Drahtseilhalters 10, welches dem Nivelliermodul 20 abgewandt ist, in den Drahtseilhalter 10 eingeführt werden, teilweise durch den Drahtseilhalter 10 hindurchgeführt werden und durch eine seitlichen Drahtseilöffnung 12 in einer Umfangsfläche des Drahtseilhalters 10 wieder herausgeführt werden. Das Drahtseil wird sicher in dem Drahtseilhalter 10 eingeklemmt. Somit kann der Lasthalter 200 über den Drahtseilhalter 10 und ein Drahtseil an einem Hängepunkt oder an einer Zwischentraverse aufgehängt werden.

Zudem ist die Messzelle 242 des Lasthalters 200 nicht von im Wesentlichen Z-förmiger Gestalt, sondern weist eine quaderförmige Grundform mit einer zentralen Ausnehmung auf. Zudem ist in Fig. 8 ein Dehnungsmesstreifen 42c erkennbar.

Das Elektronikmodul 43, das Datenübertragungsmodul 47, die Stromspeicher-Aufnahme 52, die Abdeckung 53, die Stromspeichermodule 54 und die akustische Warnvorrichtung 51, die in Fig. 6 gezeigt sind, sind auch in dem Messmodul 40 in Fig. 8 vorhanden und nur zur besseren Übersichtlichkeit in Fig. 8 nicht dargestellt.

Fig. 9 zeigt ein Lasthaltersystem 100 mit drei Lasthaltern 1 gemäß der in Fig. 1 gezeigten, ersten Ausführungsform und der zentralen Überwachungseinheit 101.

Die Lasthalter 1 kommunizieren mit ihrem jeweiligen Datenübertragungsmodul 47 mit dem Datenübertragungsmodul 102 der zentralen Überwachungseinheit 101 über Funksignale 120. Die Funksignale werden in einem frei zugänglichen Frequenzbereich übertragen, beispielsweise im 868 MHz-Band (SRD-Band Europa) und/oder im 915 MHz-Band (ISM-Band, Region 2).

Die Lasthalter 1 und die zentrale Überwachungseinheit 101 bilden ein Drahtlosnetzwerk, beispielsweise ein Bluetooth-Low-Energy-Drahtlosnetzwerk, ein ZigBee-Drahtlosnetzwerk oder ein Long-Range-Wide-Area-Drahtlosnetzwerk.

Die zentrale Überwachungseinheit 101 dient zur Programmierung der Lasthalter 1 sowie zum Empfang, zur Anzeige und zur Protokollierung der von den Lasthaltern 1 erhobenen Messdaten.

Insbesondere übermittelt jeder der Lasthalter 1 in regelmäßigen Zeitintervallen zumindest die jeweils gemessene Zuglast, die gemessene Temperatur und den Ladezustand an die zentrale Überwachungseinheit 101.

Die Überwachungseinheit 101 ist in Fig. 9 als ein Notebook ausgebildet. Sie kann stattdessen beispielsweise als Smartphone, als Tablet-Computer oder als Personal Computer ausgebildet sein.

Die Überwachungseinheit 101 umfasst in der gezeigten Ausführungsform Eingabemittel 103 in Form einer Tastatur und einen Bildschirm 104. In einer Weiterbildung kann der Bildschirm 104 als Touchscreen ausgebildet sein und stattdessen oder zusätzlich als Eingabemittel dienen.

Auf dem Bildschirm 104 kann eine Übersichtsdarstellung der Informationen bezüglich der Lasthalter 1 angezeigt werden. Für jeden Lasthalter 1 ist eine Statusanzeige 105 vorgesehen. Dabei sind die Statusanzeigen 105 auf dem Bildschirm 104 relativ zueinander so positionierbar, wie es der realen räumlichen Positionierung der Lasthalter 1 entspricht.

Jede der Statusanzeigen 105 weist eine Zuglast-Anzeige 106für die Zuglast, eine Lastzustand-Anzeige 107 für den Lastzustand, eine Ladezustand-Anzeige 108 für den Ladezustand, eine Lastgrenze-Anzeige 109 für die vorgegebene Lastgrenze und/oder eine Maximallast-Anzeige 110 für die vorgegebene Maximallastgrenze des zugehörigen Lasthalters 1 auf. Die einzelnen Anzeigenelemente können beliebig ein- oder ausgeblendet werden. Wenn ein Zeitintervall größer null für die Messungen des Lasthalters 1 vorgesehen ist, wird jeweils der zuletzt festgestellte Wert angezeigt.

Für jeden der Lasthalter 1 kann die vorgegebene Lastgrenze über die zugehörige Lastgrenze-Anzeige 109 eingestellt werden. Die eingestellte Lastgrenze wird über das Datenübertragungsmodul 102 und das Datenübertragungsmodul 47 zu dem Messmodul 40 des jeweiligen Lasthalters 1 übermittelt und in dessen Speichereinheit 45 gespeichert. In gleicher Weise kann über die Maximallast-Anzeige 110 die Maximallastgrenze eingestellt werden.

Im Übrigen kann mittels der Überwachungseinheit 101 für jeden der Lasthalter 1 das zugehörige Zeitintervall eingestellt werden. Außerdem kann jeder der Lasthalter 1 mittels der Überwachungseinheit 101 von dem Betriebszustand in den Ruhezustand gebracht werden und aus dem Ruhezustand in den Betriebszustand aufgeweckt werden.

Die Lastzustand-Anzeige 107 stellt den Lastzustand des zugehörigen Lasthalters 1 in Ampelform dar. Bei unbedenklichem Lastzustand leuchtet eine grüne Leuchtanzeige 107a, bei bedenklichem Lastzustand eine gelbe Leuchtanzeige 107b und bei kritischem Lastzustand eine rote Leuchtanzeige 107c. Es kann stattdessen vorgesehen sein, dass die Überwachungseinheit 101 nur die gemessene Zuglast anzeigt.

Selbstverständlich können in dem Lasthaltersystem 100 auch Lasthalter 200 gemäß der zweiten Ausführungsform, wie sie in Fig. 8 gezeigt ist, verwendet werden.

Der Lasthalter 1 gemäß der ersten Ausführungsform und der Lasthalter 200 gemäß der zweiten Ausführungsform sorgen jeweils für eine höhere Sicherheit und vereinfachen die korrekte Einrichtung des Abhängesystems. Sie vermindern jeweils das Risiko des Abstürzens von Lasten bei Verwendung des Abhängesystems und vereinfachen die Ausbalancierung und Feinjustierung der angehängten Last und/oder der angehängten Zwischentraverse.

Das Lasthaltersystem 100 ermöglicht darüber hinaus eine einfache, übersichtliche und intuitive Überwachung und Programmierung der Lasthalter 1 bzw. Lasthalter 200 des Abhängesystems.

### Bezugszeichenliste:

- 1: Lasthalter
- 10: Aufhängemodul (Drahtseilhalter)
- 20, 20': Nivelliermodul
- 21: Mittelhülse
- 22, 23: Hülsenteil
- 24: Maulschlüsseleingriff
- 25, 25': (erstes) Ausdrehmodul
- 26: Hülseneingriffselement
- 27: Ausdrehschutz
- 29, 29': Flansch
- 30, 30': Befestigungsmittel
- 31: Gewindebohrung
- 32: Maulschlüsseleingriff
- 33: (zweites) Ausdrehmodul
- 34: Hülseneingriffselement
- 35: Ausdrehschutz
- 36: Flansch
- 37: Maulschlüsseleingriff
- 38: Befestigungsmittel
- 40: Messmodul
- 41: Gehäuse
- 42: Last-Messzelle
- 42a, 42b: Befestigungsmittel
- 42c: Dehnungsmessstreifen
- 43: Elektronikmodul
- 44: Prozessoreinheit
- 45: Speichereinheit
- 46: Sicherheitseinheit
- 47: Datenübertragungsmodul
- 48: Temperatursensor
- 50: optische Warnvorrichtung
- 50a: optisches Freigabesignal (LED)
- 50b: optische Lastwarnung (LED)
- 50c: optische Maximallastwarnung (LED)
- 51: akustische Warnvorrichtung
- 52: Stromspeicheraufnahme (Batteriefach)
- 53: Stromspeichermodul (Batterie)
- 60: Lastaufnahmevorrichtung
- 61: Ring
- 62: Befestigungsmittel
- 63: Drehgelenk
- 100: Lasthaltersystem
- 101: Überwachungseinheit
- 102: Datenübertragungsmodul
- 103: Eingabemittel
- 104: Bildschirm
- 105: Statusanzeige
- 106: Zuglast-Anzeige
- 107: Lastzustand-Anzeige
- 107a, 107b, 107c: Leuchtanzeige
- 108: Ladezustand-Anzeige
- 109: Temperatur-Anzeige
- 110: Maximallast-Anzeige
- 111: Lastgrenze-Anzeige
- 120: Funksignal
- 2228: erste Gewindeverbindung
- 2334: zweite Gewindeverbindung
- L: Längsrichtung
- L1, L2: Länge
- X1: erste Richtung
- X2: zweite Richtung

## Patentansprüche

1. Lasthalter (1, 200) für ein Abhängesystem zum Abhängen von Lasten, umfassend:
Befestigungsmittel (30, 30') zum lösbaren Befestigen eines Aufhängemoduls (10) und/oder ein Aufhängemodul (10) an einem ersten Ende des Lasthalters (1, 200);
eine Lastaufnahmevorrichtung (60) an einem zweiten Ende des Lasthalters (1, 200), welches dem ersten Ende entlang einer Längsrichtung (L) des Lasthalters (1, 200) abgewandt ist;
ein Nivelliermodul (20, 20') zur Verstellung einer Länge (L1, L2) des Lasthalters (1, 200) in der Längsrichtung (L); und
ein Messmodul (40) zur Messung einer Zuglast zwischen der Lastaufnahmevorrichtung (60) und dem ersten Ende;
wobei das Nivelliermodul (20, 20') umfasst:
- eine Mittelhülse (21);
- ein erstes Ausdrehmodul (25, 25'), das über eine erste Gewindeverbindung (2228) in Eingriff mit der Mittelhülse (21) steht und an einer ersten Seite der Mittelhülse (21) in der Längsrichtung (L) mit einem ersten Überstand aus der Mittelhülse (21) hervorsteht, wobei der erste Überstand durch Drehung der Mittelhülse (21) relativ zu dem ersten Ausdrehmodul (25, 25') veränderbar ist; und
- ein zweites Ausdrehmodul (33), das über eine zweite Gewindeverbindung (2334) in Eingriff mit der Mittelhülse (21) steht und an einer zweiten Seite der Mittelhülse (21) in der Längsrichtung (L), die der ersten Seite abgewandt ist, mit einem zweiten Überstand aus der Mittelhülse (21) hervorsteht, wobei der zweite Überstand durch Drehung der Mittelhülse (21) relativ zu dem zweiten Ausdrehmodul (33) veränderbar ist;
**dadurch gekennzeichnet, dass** das erste Ausdrehmodul (25, 25') auf einer der Mittelhülse (21) zugewandten Seite in der Längsrichtung (L) ein Hülseneingriffselement (26) mit einem Außengewinde für die erste Gewindeverbindung (2228) umfasst, wobei das Hülseneingriffselement (26) des ersten Ausdrehmoduls (25, 25') einen Ausdrehschutz (27) umfasst, der verhindert, dass das erste Ausdrehmodul (25, 25') vollständig aus der Mittelhülse (21) ausgedreht werden kann; und/oder
dass das zweite Ausdrehmodul (33) auf einer der Mittelhülse (21) zugewandten Seite in der Längsrichtung (L) ein Hülseneingriffselement (34) mit einem Außengewinde für die zweite Gewindeverbindung (2334) umfasst, wobei das Hülseneingriffselement (34) des zweiten Ausdrehmoduls (33) einen Ausdrehschutz (35) umfasst, der verhindert, dass das zweite Ausdrehmodul (33) vollständig aus der Mittelhülse (21) ausgedreht werden kann.

2. Lasthalter (1, 200) nach Anspruch 1, **dadurch gekennzeichnet, dass** das Messmodul (40) eine Last-Messzelle (42) umfasst.

3. Lasthalter (1, 200) nach einem der vorhergehenden Ansprüche, **gekennzeichnet durch** eine optische Warnvorrichtung (50), welche eine optische Lastwarnung (50b) anzeigt, wenn die gemessene Zuglast eine Lastgrenze übersteigt, und/oder eine optische Maximallastwarnung (50c) anzeigt, wenn die gemessene Zuglast eine vorgebbare Maximallastgrenze übersteigt.

4. Lasthalter (1, 200) nach einem der vorhergehenden Ansprüche, **gekennzeichnet durch** eine akustische Warnvorrichtung (51), welche eine akustische Lastwarnung ausgibt, wenn die gemessene Zuglast die Lastgrenze übersteigt, und/oder eine akustische Maximallastwarnung ausgibt, wenn die gemessene Zuglast die vorgebbare Maximallastgrenze übersteigt.

5. Lasthalter (200) nach einem der vorhergehenden Ansprüche, **dadurch gekennzeichnet, dass** der Lasthalter (200) einen Drahtseilhalter und/oder ein Kettenzug-Eingriffsmittel als das Aufhängemodul (10) aufweist.

6. Lasthalter (1, 200) nach einem der vorhergehenden Ansprüche, **dadurch gekennzeichnet, dass** das Aufhängemodul (10) lösbar an dem Nivelliermodul (20, 20') befestigbar ist.

7. Lasthalter (1, 200) nach einem der vorhergehenden Ansprüche, **dadurch gekennzeichnet, dass** die Lastaufnahmevorrichtung (60) einen Ring (61), einen Schäkel oder einen Haken aufweist, der um 360° um die Längsrichtung (L) drehbar ist.

8. Lasthalter (1, 200) nach einem der vorhergehenden Ansprüche, **dadurch gekennzeichnet, dass** der Lasthalter (1, 200) eine Stromspeicher-Aufnahme (37) und/oder ein Stromspeichermodul (38) aufweist.

9. Lasthalter (1, 200) nach einem der vorhergehenden Ansprüche, **dadurch gekennzeichnet, dass** die erste Gewindeverbindung und die zweite Gewindeverbindung entgegengesetzte Gewinderichtungen aufweisen.

10. Lasthalter (1, 200) nach einem der vorhergehenden Ansprüche, **dadurch gekennzeichnet, dass** der Lasthalter (1, 200) ein Datenübertragungsmodul (39) zur kabellosen Übertragung der gemessenen Zuglast und/oder eines Lastzustandes des Lasthalters (1, 200) aufweist, wobei der Lastzustand anhand der gemessenen Zuglast sowie der vorgebbaren Lastgrenze und/oder Maximallast bestimmt wird.

11. Lasthaltersystem (100) für ein Abhängesystem zum Abhängen von Lasten, **gekennzeichnet durch** mindestens einen Lasthalter (1, 200) nach Anspruch 10,
wobei das Lasthaltersystem (100) ferner eine zentrale Überwachsungseinheit (101) mit einem Datenübertragungsmodul (102) zur drahtlosen Kommunikation mit dem mindestens einen Lasthalter (1, 200) aufweist.

## Claims

1. Load holder (1, 200) for a suspension system for suspending loads, comprising:
fastening means (30, 30') for releasably fastening a suspension module (10) to and/or a suspension module (10) at a first end of the load holder (1, 200);
a load bearing device (60) at a second end of the load holder (1, 200), which faces away from the first end along a longitudinal direction (L) of the load holder (1, 200);
a levelling module (20, 20') for adjusting a length (L1, L2) of the load holder (1, 200) in the longitudinal direction (L); and
a measurement module (40) for measuring a tensile load between the load bearing device (60) and the first end;
wherein the levelling module (20, 20') comprises:
- a central sleeve (21);
- a first winding-out module (25, 25'), which engages with the central sleeve (21) via a first threaded connection (2228) and protrudes from the central sleeve (21) at a first side of the central sleeve (21) in the longitudinal direction (L) with a first protruding length, wherein the first protruding length is variable by turning the central sleeve (21) relative to the first winding-out module (25, 25'); and
- a second winding-out module (33), which engages with the central sleeve (21) via a second threaded connection (2334) and protrudes from the central sleeve (21) at a second side of the central sleeve (21) in the longitudinal direction (L), which faces away from the first side, with a second protruding length, wherein the second protruding length is variable by turning the central sleeve (21) relative to the second winding-out module (33);
**characterized in that** the first winding-out module (25, 25') comprises on a side facing the central sleeve (21) in the longitudinal direction (L) a sleeve engagement element (26) with an external thread for the first threaded connection (2228), wherein the sleeve engagement element (26) of the first winding-out module (25, 25') comprises an unscrewing protection device (27), which prevents the first winding-out module (25, 25') from being fully unscrewed from the center sleeve (21); and/or
**in that** the second winding-out module (33) comprises on a side facing the central sleeve (21) in the longitudinal direction (L) a sleeve engagement element (34) with an external thread for the second threaded connection (2334), wherein the sleeve engagement element (34) of the second winding-out module (33) comprises an unscrewing protection device (35) which prevents the second winding-out module (33) from being fully unscrewed from the center sleeve (21).

2. Load holder (1, 200) according to claim 1, **characterized in that** the measurement module (40) comprises a load cell (42).

3. Load holder (1, 200) according to any one of the preceding claims, **characterized by** an optical warning device (50), which displays an optical load warning (50b) when the measured tensile load exceeds a load threshold, and/or displays an optical maximum load warning (50c) when the measured tensile load exceeds a pre-settable maximum load threshold.

4. Load holder (1, 200) according to any one of the preceding claims, **characterized by** an audible warning device (51), which emits an audible load warning when the measured tensile load exceeds the load threshold, and/or emits an audible maximum load warning when the measured tensile load exceeds the pre-settable maximum load threshold.

5. Load holder (200) according to any one of the preceding claims, **characterized in that** the load holder (200) includes a wire rope holder and/or a chain hoist engagement means as the suspension module (10).

6. Load holder (1, 200) according to any one of the preceding claims, **characterized in that** the suspension module (10) can be releasably attached to the levelling module (20, 20').

7. Load holder (1, 200) according to any one of the preceding claims, **characterized in that** the load bearing device (60) comprises a ring (61), shackle or hook, which can be rotated 360° around the longitudinal direction (L).

8. Load holder (1, 200) according to any one of the preceding claims, **characterized in that** the load holder (1, 200) comprises an energy storage receptacle (37) and/or an energy storage module (38).

9. Load holder (1, 200) according to any one of the preceding claims, **characterized in that** the first threaded connection and the second threaded connection have opposite thread directions.

10. Load holder (1, 200) according to any one of the preceding claims, **characterized in that** the load holder (1, 200) comprises a data transfer module (39) for the wireless transfer of the measured tensile load and/or a load condition of the load holder (1, 200), wherein the load condition is determined based on the measured tensile load as well as the pre-settable load threshold and/or maximum load.

11. Load holder system (100) for a suspension system for suspending loads, **characterized by** at least one load holder (1, 200) according to claim 10,
wherein the load holder system (100) further comprises a central monitoring unit (101) with a data transfer module (102) for wireless communication with the at least one load holder (1, 200).

## Revendications

1. Porte-charge (1, 200) pour un système de suspension, destiné à suspendre des charges, comprenant :
un moyen de fixation (30, 30') pour fixer d'une manière amovible un module de suspension (10) et/ou un module de suspension (10) à une première extrémité du porte-charge (1, 200) ;
un dispositif de suspension de charge (60) à une deuxième extrémité du porte-charge (1, 200), qui est opposée à la première extrémité le long d'une direction longitudinale (L) du porte-charge (1, 200) ;
un module de nivellement (20, 20'), pour ajuster une longueur (L1, L2) du porte-charge (1, 200) dans la direction longitudinale (L) ; et
un module de mesure (40) pour mesurer une charge de traction entre le dispositif de suspension de charge (60) et la première extrémité ;
dans lequel le module de nivellement (20, 20') comprend :
- une douille centrale (21) ;
- un premier module de dévissage (25, 25'), qui est en engagement avec la douille centrale (21) par l'intermédiaire d'un premier assemblage par filetage (2228), et dépasse de la douille centrale (21), avec un premier porte-à-faux dans la direction longitudinale (L), sur un premier côté de la douille centrale (21), le premier porte-à-faux pouvant être modifié par rotation de la douille centrale (21) par rapport au premier module de dévissage (25, 25'), et
- un deuxième module de dévissage (33), qui est en engagement avec la douille centrale (21) par l'intermédiaire d'un deuxième assemblage par filetage (2334), et dépasse de la douille centrale (21), avec un deuxième porte-à-faux dans la direction longitudinale (L), à l'opposé du premier côté, sur un deuxième côté de la douille centrale (21),
le deuxième porte-à-faux pouvant être modifié par rotation de la douille centrale (21) par rapport au deuxième module de dévissage (33) ;
**caractérisé en ce que** le premier module de dévissage (25, 25') comprend, sur un côté dirigé vers la douille centrale (21), dans la direction longitudinale (L) un élément (26) d'engagement avec la douille, ayant un premier filetage extérieur pour le premier assemblage par filetage (2228), l'élément (26) en engagement avec la douille du premier module de dévissage (25, 25') comprenant une protection anti-dévissage (27), qui empêche que le premier module de dévissage (25, 25') puisse se dévisser de la douille centrale (21), et/ou
**en ce que** le deuxième module de dévissage (33) comprend sur un côté dirigé vers la douille centrale (21), dans la direction longitudinale (L), un élément (34) en engagement avec la douille, ayant un filetage extérieur pour le deuxième assemblage par filetage (2334), l'élément (34) en d'engagement avec la douille du deuxième module de dévissage (33) comprenant une protection anti-dévissage (35), qui empêche que le deuxième module de dévissage (33) puisse se dévisser complètement de la douille centrale (21).

2. Porte-charge (1, 200) selon la revendication 1, **caractérisé en ce que** le module de mesure (40) comprend une cellule de mesure de charge (42).

3. Porte-charge (1, 200) selon l'une des revendications précédentes, **caractérisé par** un dispositif optique d'alarme (50), qui affiche une alarme optique de charge (50b) quand la charge de traction mesurée dépasse une charge limite, et/ou une alarme optique de charge maximale (50c), quand la charge de traction mesurée dépasse une charge maximale limite prédéfinissable.

4. Porte-charge (1, 200) selon l'une des revendications précédentes, **caractérisé par** un dispositif acoustique d'alarme (51), qui émet une alarme acoustique de charge quand la charge de traction mesurée dépasse la charge limite, et/ou émet une alarme acoustique de charge maximale, quand la charge de traction mesurée dépasse la charge maximale limite prédéfinissable.

5. Porte-charge (200) selon l'une des revendications précédentes, **caractérisé en ce que** le porte-charge (200) présente en tant que module de suspension (10) un support à câble et/ou un moyen d'engagement à chaîne.

6. Porte-charge (1, 200) selon l'une des revendications précédentes, **caractérisé en ce que** le module de suspension (10) est fixé d'une manière amovible au module de nivellement (20, 20').

7. Porte-charge (1, 200) selon l'une des revendications précédentes, **caractérisé en ce que** le dispositif de suspension de charge (60) comprend une bague (61), une manille ou un crochet, qui peut tourner de 360° autour de la direction longitudinale (L).

8. Porte-charge (1, 200) selon l'une des revendications précédentes, **caractérisé en ce que** le porte-charge (1, 200) comprend un logement (37) pour accumulateur et/ou un module accumulateur (38).

9. Porte-charge (1, 200) selon l'une des revendications précédentes, **caractérisé en ce que** le premier assemblage par filetage et le deuxième assemblage par filetage présentent des sens de filetage opposés.

10. Porte-charge (1, 200) selon l'une des revendications précédentes, **caractérisé en ce que** le porte-charge (1, 200) comprend un module de transmission de données (39) pour la transmission sans fil de la charge de traction mesurée et/ou d'un état de charge du porte-charge (1, 200), l'état de charge étant déterminé à l'aide de la charge de traction mesurée ainsi que de la charge limite et/ou de la charge maximale prédéfinissables.

11. Système porte-charge (100) pour un système de suspension destiné à la suspension de charges, **caractérisé par** au moins un porte-charge (1, 200) selon la revendication 10,
le système porte-charge (100) comprenant en outre une unité centrale de surveillance (101) avec un module de transmission de données (102), pour la communication sans fil avec l'au moins un porte-charge (1, 200).
